# EUROPEAN PATENT APPLICATION

(11) **EP 2 719 286 A1**
(43) Date of publication of application: **16.04.2014**
(21) Application number: 13171328.1
(22) Date of filing: 10.06.2013
(51) Int. Cl.: A23G 9/00, F25C 5/00, F25C 5/04, A23G 9/28

(54) **Apparatus with a heater for heating an ice-based frozen product and with a crusher for crushing the product after it has been heated**

(30) Priority: 11.07.2012 EP 12175987
(71) Applicant: The Coca-Cola Company, Atlanta, GA 30313 (US)
(72) Inventor: Congiu, Pierpaolo, 08173 Barcelona (ES); Lovecchio, Natalia, 08173 Barcelona (ES); Brun, Albert, 08173 Barcelona (ES); Quintanilla, Alvaro, 08173 Barcelona (ES); Forès, Jose Manuel Calzada, 46680 Valencia (ES); Figueras, Juan, 28042 Madrid (ES)
(74) Representative: Noronha, Catherine

(57) **Abstract**

A dispenser 200 for dispensing an ice-based product comprises: heating means 201 for heating a frozen product; and a crusher 203 arranged to crush the frozen product after it has been heated. Once the frozen product has been heated and then crushed, an ice-based product can be dispensed from the dispenser.

## Description

The present invention relates to the field of beverage or other similar product dispensers. In particular, it relates to dispensers of ice-based products such as slush beverages, ice-based desserts or granitas.

In known iced beverage dispensers, liquid flavourings may be chilled in a barrel or other container. As ice forms around the edges of the barrel, the ice is scraped away with an auger or other scraping mechanism so as to produce a slush beverage or a granita. However, the various surfaces that come into contact with the product in such dispensers can be difficult to clean and maintain and may be susceptible to microbial growth under certain conditions. Consequently, it is usual for the liquid flavouring to contain a preservative in order to reduce or prevent microbial growth in the dispenser.

However, some beverages or liquid flavourings do not contain preservatives.

In view of this, the inventors realised that it would be advantageous if they could provide a dispensing machine that can be used to dispense ice-based beverages or other ice-based products that do not contain preservatives in a hygienic manner and without the need for frequent cleaning.

According to a first aspect of the invention, there is provided an apparatus for dispensing an ice-based product comprising: heating means for heating a frozen product; and a crusher arranged to crush the product after it has been heated; wherein, once the product has been heated and then crushed, an ice-based product can be dispensed from the apparatus.

According to this aspect of the invention, the product may be provided into the apparatus already mixed (e.g. as a complete product suitable for consumption). Furthermore, the product is provided into the apparatus in an already frozen state. Therefore, since the only ingredient may be supplied into the apparatus already frozen, there is less risk of contamination and/or microbial growth, and frequent cleaning is not required. It is therefore possible to use such an apparatus to produce ice-based products that do not contain preservatives in a hygienic manner.

The term "ice-based product" is intended to cover any product, such as a beverage or a dessert, which contains slush-like or crushed ice. For example, the ice-based product could be a slush beverage or a granita. The ice-based product could also or alternatively be an ice-based product with a more dessert-like (i.e. less liquid-like) consistency, which could be eaten with a spoon, for example.

The frozen product, which is the ingredient provided into the apparatus (i.e. before heating and crushing), could be, for example, any frozen or partially frozen liquid flavouring or base for an ice-based product. The frozen product may or may not contain preservatives. In a preferred example, the frozen product is a frozen pre-mixed beverage which is suitable for immediate consumption (i.e. no further ingredients are required).

When the ice-based product is dispensed from the apparatus, it is preferably dispensed into a receptacle such as a cup, glass, tub or bowl. Preferably, the receptacle may be provided beneath the crusher to facilitate the dispensing process.

The heating means could be any heater suitable for heating a frozen product, ideally in a controllable way.

Preferably, the heating means comprises or is a microwave. A microwave may provide a convenient, easy-to-use and easy-to-control (i.e. its settings can be changed easily) form of heater. As such, it is easy to ensure that the beverage is heated by the right amount to achieve a desired consistency.

In a preferred embodiment, the microwave has a frequency of 2455 MHz.

The power of the microwave is preferably less than 1000 W. For example, it could be 400-900 W, preferably 600-800 W.

Preferably, the heating means or apparatus comprises a controller for setting the power and/or duration at/for which the heating means is applied to the frozen product.

The power and/or time of the heating means being applied to the frozen product may be set in order to obtain a desired consistency of the ice-based product. For example, the heating means could be applied for a longer time and/or at a higher power in order to produce a final ice-based product with a more liquid consistency (e.g. an ice-based beverage). On the other hand, the heating means could be applied for a shorter time and/or at a lower power in order to produce a final ice-based product with a more solid-like consistency (e.g. suitable for a dessert).

Preferably, the heating means, or the apparatus as a whole, has at least two power and/or time settings, one for a more liquid-like product and one for a more solid-like product.

Preferably, the apparatus comprises a receiver for receiving and holding a container containing the frozen product in the apparatus. The frozen product could be provided into the apparatus in a bottle or other suitable container.

In one example, a container is provided into which un-frozen (i.e. liquid) product may be provided. That container and its contents is then frozen, and then provided into the apparatus for dispensing the ice-based product. After use, such a container could then be cleaned and re-used.

Before placing the bottle or other container in the apparatus, its lid (if present) may be removed.

By providing the frozen product into the apparatus whilst still in its container, this can help to limit the amount (e.g. the number and size of the surfaces) of the apparatus which comes into contact with the product (e.g. a separate receptacle for receiving the product in the apparatus need not be provided) and the time during which the product is in contact with parts of the apparatus, thereby limiting both the opportunity for microbial growth in/on the apparatus and the need for cleaning.

The receiver could comprise a support such as a ring or part-ring for supporting the container in the apparatus. Preferably, the container has a larger diameter portion and a smaller diameter portion such that the smaller diameter portion can be inserted into the ring or part-ring and the larger diameter portion can then sit on the ring or part-ring. The ring could be a part-ring with an opening in its circumference through which the container (e.g. a neck of the container) could be introduced.

Preferably, the receiver is arranged to receive and/or hold the container in an inverted position (e.g. up-side-down) or partially inverted such that an opening in the container is arranged at a lower end thereof. This can facilitate easy removal of the product from the container once it has been heated and crushed.

The receiver may comprise a pivotable support onto which a bottle may be placed before being pivoted fully into the receiver. The support may be attached to a handle for moving the support. Preferably, a locking means, such as a hook, is attached to the support for locking it into position when the bottle is pivoted fully into the receiver.

Preferably, the receiver is arranged to hold and/or support the container at at least two points or regions of the container, for example at a neck and at a bottom of the container. This can help to ensure that the container is held securely within the apparatus.

The receiver may comprise a clamping means (e.g. a clamp) for applying a force to the container, preferably to an end of the container, to hold it in position in the apparatus. The force could be applied to an end of the container such that the container is pushed towards the support, for example.

The clamping means could comprise a spring for applying the force to the container, for example. The clamping means could additionally or alternatively comprise a plunger, such as a fluted plunger, that fits over a bottom of the container. The spring could be arranged to apply pressure on the container with the plunger.

The receiver may comprise a punch for punching into a bottle held in the receiver. The punch may be a sharp spike, for example. Preferably it is made of a metal such as stainless steel. Providing a punching element can help to facilitate extraction of the product after crushing and can render the bottle unsuitable for reuse, helping to maintain good hygiene practice.

The apparatus may further comprise means for moving a container for containing the frozen product within the apparatus. The means for moving the container may be arranged to move the container vertically and/or horizontally and/or rotationally about a longitudinal axis of the container and/or rotationally about an axis other than the longitudinal axis of the container, for example.

In one embodiment, the means for moving the container are arranged to move the container only vertically within the apparatus. This helps to keep the apparatus simple.

The means for moving the container within the apparatus may comprise means for moving the container to and from, or into and out of, the heating means, such that the frozen product can be heated by the heating means.

In an alternative embodiment, the apparatus comprises means for moving the heating means to the container such that the contents of the container may be heated by the heating means. Preferably, the means for moving the heating means to the container is arranged to move the heating means laterally within the apparatus.

In either case, alternatively or additionally, the means for moving the container within the apparatus may comprise means for moving the container to and from the crusher, such that the frozen product can be crushed by the crusher.

The means for moving a container and/or the means for moving the heating means may be any means suitable for moving a container or heating means within the apparatus. For example, it/they could be or comprise one or more moving mechanisms and/or one or more motors, for moving a container or heating means within the apparatus. A moving mechanism could comprise any or all of one or more levers, arms, gears, guide rails, supports etc. The moving mechanism could be arranged to be driven (i.e. to be made to move) by one or more motors, for example. Alternatively or additionally, the moving mechanism could be arranged to be driven or made to move, or partially driven or made to move, by a user.

The means for moving a container and/or the means for moving the heating means may comprise a movable system, such as a system comprising a movable arm or a support arranged to move along one or more guide rails.

Preferably, the movable arm or the support is connected to a motor for moving the arm or support. The motion of the arm or support may be controlled, preferably automatically, by a controller.

Preferably, the receiver and/ore heating means is connected or attached to the movable arm or the support.

The movable arm or support may be arranged to move the container to the heating means such that heat may be applied to the frozen product. The movable arm or support may alternatively or additionally be arranged to move the product into a crushing area where it can be crushed by the crusher, and/or move the heating means to the container such that the heating means can heat the product in the container. Preferably, the crusher comprises an elongated member with a crushing arrangement attached thereto, preferably at an end portion thereof.

The crushing arrangement may comprise a blade arrangement comprising one or more blades, for example.

Alternatively or additionally, the crushing arrangement could comprise a grinder. The grinder could have any form suitable for grinding the frozen product. For example, it could be substantially conical or cylindrical, optionally with one or more grooves therein. The grinder could have the shape of a four-headed arrow, for example. The grinder may have a drill bit-like shape.

The crushing arrangement and/or the elongated member (or parts thereof) is/are preferably made of a metal such as stainless steel or titanium. By making the various components from metal, this helps to reduce the noise and extend the durability of the dispenser when in use.

In a preferred embodiment, the crushing arrangement, e.g. the blade arrangement, is rotationally symmetrically arranged around the elongated member.

In a preferred embodiment, the blade arrangement comprises a pair of crushing blades arranged opposite each other across the elongated member. A second pair of crushing blades may also be provided, for example at right angles to the first pair, and arranged opposite each other across the elongated member. The second pair of blades may be smaller than the first pair.

The blade arrangement may comprise blades of at least two sizes.

One or more blades may be bent.

One or more blades may comprise a serrated edge.

A tip portion of at least one of the crushing blades (i.e. a portion of the crushing blade furthest from the elongated member) may be bent. For example, one or one pair of crushing blade(s) could have its/their tip(s) bent towards a first end of the elongated member. A second or a second pair of crushing blade(s) could have its/their tip(s) bent towards the first end or towards a second end the elongated member.

The blade arrangement could comprise a number of crushing blades. For example, the blade arrangement could comprise 1, 2, 3, 4, 5, 6, 7, 8, 9 or 10 crushing blades. In a preferred embodiment, the blade arrangement comprises two crushing blades. In another embodiment, the blade arrangement comprises 3-5, preferably four, crushing blades. Preferably, the crushing blades, which may be of different sizes and/or shapes, are arranged in a rotationally symmetric fashion around the elongated member.

The crusher and/or blade arrangement thereof may comprise one or more paddles. The paddles may be made of a metal such as titanium. The one or more paddles are preferably blunt, i.e. do not comprise a sharp edge. The one or more paddles are preferably arranged to churn, and possibly crush, the product in the container. By making the paddles from metal, this helps to reduce the noise and extend the durability of the dispenser when in use.

Preferably, the one or more paddles are freely movable with respect to the rest of the crusher.

For example, the one or more paddles may be arranged such that their angle with respect to the longitudinal axis of the crusher increases or decreases (i.e. the one or more paddles tilt up of down) as the speed of the rotation of the crusher increases or decreases.

Preferably, the one or more paddles comprise a flat part and an angled part, wherein the angled part is preferably arranged at a trailing end of the paddle. The angled part is preferably arranged such that it extends downwardly from the flat part when rotating inside the container.

Preferably, the crusher comprises a pair of paddles.

Preferably, the paddles are sized such that they can fit into a bottle without being in contact with its inner sides. This can help to reduce the noise and extend the durability of the crusher when in use.

Preferably, the maximum diameter of the crushing arrangement does not exceed the diameter of an opening into the container or bottle containing the frozen product in the apparatus. For example, the maximum diameter of the crushing arrangement could be less than or equal to 40 mm, less than or equal to 35 mm, less than or equal to 30 mm, less than or equal to 25 mm, or less than or equal to 20 mm. This ensures that the crushing arrangement can fit into the container or bottle.

Preferably, in use, the crushing arrangement is made to rotate at 1000 to 4000 rpm, preferably 1500 to 3000 rpm.

The crushing arrangement could be made to translate vertically and/or horizontally within a stationary container to crush the frozen product contained therein. However, it is preferred that the crushing arrangement is stationary (except for its rotation) and the container holding the frozen product is moved vertically and horizontally over the crushing arrangement such that the crushing arrangement can crush the frozen product. Alternatively, the container holding the frozen product is moved only vertically over the crushing arrangement, but not horizontally. In a preferred embodiment, the container moves up and down over the crushing arrangement multiple times, preferably covering different distances each time, to facilitate the crushing and extraction of the product.

The duration of the crushing process and/or its speed (e.g. the rpm of the crushing arrangement and/or the speed of motion of the container with respect to the crushing arrangement) may be controlled and/or set in order to produce a product with a desired consistency. For example, to produce a product with a more liquid consistency, the duration and/or speed of the crushing process may be increased, and to produce a product with a more solid consistency, the duration and/or speed of the crushing process may be decreased, with respect to each other.

In one embodiment, the apparatus is arranged such that, during crushing, the crusher traces a generally helical or spiral path within a container containing the frozen product. This is preferably achieved by making the container move in a generally helical or spiral path over the crushing arrangement. However, the crusher could be made to move within the container.

In some embodiments, the apparatus comprises a rotation means (e.g. a rotator) for rotating the frozen product container about its longitudinal axis. The rotation means may be arranged to rotate the container in a clockwise and/or an anti-clockwise direction. The rotation of the container together with an off-centre position with respect to an axis of rotation of the crushing arrangement may result in a generally helical or spiral motion of the crushing arrangement inside the container. This can optimise the crushing and extraction of the product.

The amplitude of the generally helical or spiral path followed by the crushing arrangement inside the container may vary as the crushing arrangement moves up and down inside the container, or, preferably, as the container moves up and down over the crushing arrangement.

Preferably, the crushing arrangement and/or the container is moved such that the crushing arrangement, whilst rotating, reaches the side of the container so that substantially all of the frozen product contained therein may be crushed, and subsequently extracted from the container.

The apparatus preferably also comprises an extractor for extracting the product from the container after it has been crushed therein.

In a preferred embodiment, the extractor is provided as part of the crusher. For example, the extractor may be attached to the elongated member to which the crushing arrangement is also attached.

The extractor could be any means suitable for assisting in the extraction of the product from the container once it has been crushed. For example, it could comprise one or more extraction elements for drawing or sweeping or scraping the crushed product from the container. The extraction elements may be flexible and resilient or substantially rigid. Preferably, two or four extraction elements are provided but three, five, six, seven or eight extraction elements could be used. Preferably, the extraction elements are arranged around the elongated member in a rotationally symmetric arrangement.

The extraction element(s) may be resilient such that it(they) may deform to the shape of the container in order to provide a good extraction of the product. In this case, they should ideally be flexible and resilient enough that they can deform to enter the (narrower) width of the container's neck and then expand again radially once inside the container.

Preferably, when in a relaxed state (i.e. with no external forces acting thereon), the extraction element(s) is/are arranged at an angle to the elongated member which is greater than 0° and less than or equal to 90°, when measured from an end of elongated member to which the crushing arrangement is attached. Preferably, the angle is around 30-60°, more preferably around 40-50°, more preferably around 45°.

In one example, the extraction element(s) are made, partially or wholly, of a flexible and resilient plastic suitable for use in the food industry, rubber or silicone.

The extraction elements may be made entirely of a plastic, rubber or silicone.

Alternatively, the extraction element(s) could comprise a metal part, such as a stainless steel part. This may improve durability. The metal part could be a solid flexible metal part or it could be a metal part in the form of a mesh, for example. The metal part could have a coating, such as a plastic, rubber or silicone coating. The coating could be provided over substantially all of the metal part. Alternatively, the coating could just be provided on a tip of the extraction elements. Alternatively or additionally, the extraction element(s) could comprise a tip part attached to the metal part, the tip part being preferably made of a plastic, rubber or silicone. Providing extraction element(s) comprising a metal part with a coating and/or tip part in this way may prevent damage to the container during extraction. In some embodiments, the length of each extraction element is slightly longer, for example 5%, 10%, 15%, 20%, 25% or 25% longer, than the largest radius of the container. This means that the extraction element(s) is(are) long enough to extract all of the product from the container. The extraction elements could be 2-8 cm long, preferably 3-6 cm long, more preferably 4-5 cm long, for example.

Preferably, the extraction element(s) is(are) longer than the largest radius of the crushing arrangement. The extraction element(s) may be at least 1.1, 1.2, 1.3, 1.4, 1.5, 1.6, 1.7, 1.8, 1.9, 2.0, 2.2, 2.4, 2.6, 2.8, 3.0, 3.25, 3.5, 3.75, 4.0, 4.5, 5, 6, 7, 8, 9, 10, 12, 14, 16, 18 or 20 times longer than the largest radius of the crushing arrangement. Preferably, they are around 5-10 times longer than the largest radius of the crushing arrangement.

Preferably, the crushing arrangement is provided closer to an end of the elongated member than the extractor.

The crushing arrangement and extractor may be attached to the elongated member such that the distance between the blade arrangement and the extractor is less than 20 mm, less than 19 mm, less than 18 mm, less than 17 mm, less than 16 mm, less than 15 mm, less than 14 mm, less than 13 mm, less than 12 mm, less than 11 mm, less than 10 mm, less than 9 mm, less than 8 mm, less than 7 mm, less than 6 mm, less than 5 mm, less than 4 mm, less than 3 mm, less than 2 mm or less than 1 mm.

The extraction elements may be rigid and/or formed entirely of metal. This can help to reduce the noise and extend the durability of the crusher.

The extraction elements may comprise a number of rigid blades which are sized such that they can fit inside a neck of the container. The extraction elements are preferably slanted such that when rotated in the neck of the container they cause the crushed product to be extracted from the container. The extractor may be in the form of a propeller.

When the apparatus is in use, and particularly during extraction, the crusher may be arranged such that its longitudinal axis is positioned slightly off-centre from, i.e. is not co-linear with, the longitudinal axis of the container. This can facilitate extraction of the crushed product from the container.

Alternatively, the crusher may be arranged such that, in use, its longitudinal axis is centred with, i.e. is co-linear with, the longitudinal axis of the container.

The apparatus may comprise a freezer for storing the frozen product prior to crushing. However, in alternative embodiments the product may be stored and frozen separately prior to insertion into the apparatus for crushing.

Preferably, the apparatus comprises drainage means, such as a grid or grill with a space beneath it, for allowing any of the product which is not dispensed into a receptacle to be collected and then dispensed of.

Preferably, the insertion and extraction of the frozen product into and out of the heating means, and/or the bringing and removing of the heating means to the container, is performed automatically by the apparatus (e.g. by the means for moving the container within the apparatus). However, in alternative embodiments a user may manually insert the container holding the frozen product into the heating means and then remove it before the product is crushed.

Preferably, the crusher is powered by a motor which is arranged to cause the crushing arrangement and/or extraction elements to rotate. Preferably, the elongated member to which the crushing arrangement is attached has a length sufficient to reach inside the entire length of the product container. This means that all of the product inside the container may be crushed. For example, the elongated member could be 10-30 cm long, preferably 15-25 cm long, and more preferably 20-25 cm long.

Preferably, the crusher is detachable from the apparatus. This can allow for easy cleaning of the crusher. It is also easy to replace it, if needed.

Preferably, the apparatus comprises one or more controllers or control systems for controlling heating and/or crushing of the product automatically. Heating and/or crushing could be caused to start by a user pressing a button, pad, key, touch screen or other input device on the apparatus, for example. Alternatively, the apparatus could comprise a sensor (e.g. a light or pressure sensor) for detecting when a container is placed in the apparatus and then, when a container is detected, causing heating and/or crushing to start automatically.

Preferably, the controller or control system comprises means, such as a button, pad, key, touch screen or other input device, for a user to select a consistency of the product (e.g. drink or dessert consistency). For example, a user could select whether they want a more liquid or a more solid product.

According to a second aspect of the invention, there is provided a method of producing an ice-based product, the method comprising: receiving a frozen product in an apparatus for heating and crushing the product; heating the frozen product within the apparatus; and crushing the frozen product within the apparatus.

The method is preferably performed using the apparatus according to the first aspect of the present invention, for example with any or all of the preferred or optional features described above.

Preferably, the frozen product is held in a single container prior to it being placed in the apparatus and during the heating and crushing processes. The method may further comprise extracting the frozen product from the container after it has been crushed. Preferably, the ice-based product is dispensed into a receptacle such as a glass or cup. For a more solid-like product, the receptacle could be a bowl.

Preferably, the frozen product is heated in a microwave.

Preferably, the heating means is controlled such that the frozen product is heated to the desired consistency, e.g. for a more liquid or a more solid product.

Preferably, once a container holding the frozen product has been placed in the apparatus by a user, the rest of the process (i.e. heating, crushing and optionally also extraction) is automatic and controlled by a controller provided in the apparatus.

According to a third aspect of the present invention there is provided a crusher for crushing a frozen product in a container and then extracting it from the container, the crusher comprising: a crushing arrangement for crushing the frozen product in the container and an extractor for extracting the product from the container after it has been crushed.

The crushing arrangement may comprise a blade arrangement comprising one or more blades, for example.

Alternatively or additionally, the crushing arrangement could comprise a grinder. The grinder could have any form suitable for grinding the frozen product. For example, it could be substantially conical or cylindrical, optionally with one or more grooves therein. The grinder could have the shape of a four-headed arrow, for example. The grinder may have a drill bit-like shape.

The crusher may comprise an elongated member to which the crushing arrangement and/or extractor (preferably both) are attached.

The crusher is preferably as described above in relation to the first aspect.

For example, the crusher may comprise an elongated member with the crushing arrangement attached thereto, preferably at an end portion thereof.

The crushing arrangement and/or the elongated member (or parts thereof) is/are preferably made of a metal such as stainless steel or titanium.

Preferably, the crushing arrangement, e.g. the blade arrangement, is rotationally symmetric.

The blade arrangement may comprise blades of at least two sizes.

In a preferred embodiment, the blade arrangement comprises a pair of crushing blades, preferably arranged opposite each other across the elongated member.

A second pair of crushing blades may also be provided, for example at right angles to the first pair, and preferably arranged opposite each other across the elongated member. The second pair of blades may be smaller than the first pair.

One or more blades may be bent.

One or more blades may comprise a serrated edge.

A tip portion of at least one of the crushing blades (i.e. a portion of the crushing blade furthest from the elongated member) may be bent. For example, one or one pair of crushing blade(s) could have its/their tips bent towards a first end of the elongated member. A second or a second pair of crushing blade(s) could have its/their tip(s) bent towards the first end or towards a second end the elongated member.

The blade arrangement could comprise a number of crushing blades. For example, the blade arrangement could comprise 1, 2, 3, 4, 5, 6, 7, 8, 9 or 10 crushing blades. In a preferred embodiment, the blade arrangement comprises two crushing blades. In another embodiment, the blade arrangement comprises 3-5, preferably four, crushing blades. Preferably, the crushing blades, which may be of different sizes and/or shapes, are arranged in a rotationally symmetric fashion around the elongated member.

The crusher and/or blade arrangement thereof may comprise one or more paddles. The paddles may be made of titanium. The one or more paddles are preferably blunt, i.e. do not comprise a sharp edge. The one or more paddles are preferably arranged to churn, and possibly crush, the product in the container.

Preferably, the one or more paddles are freely movable with respect to the rest of the crusher.

For example, the one or more paddles may be arranged such that their angle with respect to the longitudinal axis of the crusher increases or decreases (i.e. the one or more paddles tilt up of down) as the speed of the rotation of the crusher increases or decreases.

Preferably, the one or more paddles comprise a flat part and an angled part, wherein the angled part is preferably arranged at a trailing end of the paddle. The angled part is preferably arranged such that it extends downwardly from the flat part when rotating inside the container.

Preferably, the crusher comprises a pair of paddles.

The paddles may be arranged at a different angle around a longitudinal axis of the crusher to that of the one or more blades. For example, a paddle may be arranged at 90 ° around a longitudinal axis of the crusher with respect to a blade.

Preferably, the maximum diameter of the crushing arrangement does not exceed the diameter of an opening into a container or bottle containing a frozen product to be crushed. For example, the maximum diameter of the crushing arrangement could be less than or equal to 40 mm, less than or equal to 35 mm, less than or equal to 30 mm, less than or equal to 25 mm, or less than or equal to 20 mm.

Preferably, in use, the crushing arrangement can be made to rotate at 1000 to 4000 rpm, preferably 1500 to 3000 rpm.

The crusher also comprises an extractor for extracting the product from a container after it has been crushed.

The extractor may be attached to the elongated member to which the crushing arrangement is also attached.

The extractor could be any means suitable for assisting in the extraction of the product from a container once it has been crushed. For example, it could comprise one or more extraction elements for drawing or sweeping or scraping the crushed product from the container. The extraction elements may be flexible and resilient or substantially rigid. Preferably, two or four extraction elements are provided but one, three, five, six, seven or eight extraction elements could be used. Preferably, the extraction elements are arranged around the elongated member in a rotationally symmetric arrangement.

The extraction element(s) may be resilient such that it(they) may deform to the shape of a container containing a frozen product in order to provide a good extraction of the product. In this case, they should ideally be flexible and resilient enough that they can deform to enter the (narrower) width of the container's neck and then expand again radially once inside the container.

Preferably, when in a relaxed state (i.e. with no external forces acting thereon), the extraction element(s) is/are arranged at an angle to the elongated member which is greater than 0° and less than or equal to 90°, when measured from an end of elongated member to which the crushing arrangement is attached. Preferably, the angle is around 30-60°, more preferably around 40-50°, more preferably around 45°.

In one example, the extraction element(s) are made, partially or wholly, of a flexible and resilient plastic suitable for use in the food industry, rubber or silicone.

The extraction elements may be made entirely of a plastic, rubber or silicone.

Alternatively, the extraction elements could comprise a metal part, such as a stainless steel part. This may improve durability. The metal part could be a solid flexible metal part or it could be a metal part in the form of a mesh, for example. The metal part could have a coating, such as a plastic, rubber or silicone coating. The coating could be provided over substantially all of the metal part. Alternatively, the coating could just be provided on a tip of the extraction elements. Alternatively or additionally, the extraction elements could comprise a tip part attached to the metal part, the tip part being preferably made of a plastic, rubber or silicone. Providing extraction elements comprising a metal part with a coating and/or tip part in this way may prevent damage to the container during extraction.

In some embodiments, the length of each extraction element is slightly longer, for example 5%, 10%, 15%, 20%, 25% or 25% longer, than the largest radius of the container. This means that the extraction element(s) is(are) long enough to extract all of the product from the container. The extraction elements could be 2-8 cm long, preferably 3-6 cm long, more preferably 4-5 cm long, for example.

Preferably, the extraction element(s) is(are) substantially longer than the largest radius of the crushing arrangement. The extraction element(s) may be at least 1.1, 1.2, 1.3, 1.4, 1.5, 1.6, 1.7, 1.8, 1.9, 2.0, 2.2, 2.4, 2.6, 2.8, 3.0, 3.25, 3.5, 3.75, 4.0, 4.5, 5, 6, 7, 8, 9, 10, 12, 14, 16, 18 or 20 times longer than the largest radius of the crushing arrangement. Preferably, they are at least five times longer than the largest radius of the crushing arrangement, more preferably around 5 to 10 times longer.

Preferably, the crushing arrangement is provided closer to an end of the elongated member than the extractor.

The crushing arrangement and extractor may be attached to the elongated member such that the distance between the blade arrangement and the extractor is less than 20 mm, less than 19 mm, less than 18 mm, less than 17 mm, less than 16 mm, less than 15 mm, less than 14 mm, less than 13 mm, less than 12 mm, less than 11 mm, less than 10 mm, less than 9 mm, less than 8 mm, less than 7 mm, less than 6 mm, less than 5 mm, less than 4 mm, less than 3 mm, less than 2 mm or less than 1 mm.

The extraction elements may be rigid and/or formed entirely of metal. This can help to reduce the noise of the crusher.

The extraction elements may comprise a number of rigid blades which are sized such that they can fit inside a neck of the container. The extraction elements are preferably slanted such that when rotated in the neck of the container they cause the crushed product to be extracted from the container. The extraction elements may be in the form of a propeller.

According to a fourth aspect of the invention, there is provided a method of crushing and extracting a frozen product contained in a container, the method comprising: introducing a crusher into the container, the crusher comprising a crushing arrangement for crushing the frozen product in the container and an extractor for extracting the product from the container after it has been crushed; crushing the product with the crushing arrangement; and then extracting the product from the container with the extractor.

The crusher is preferably as described above in relation to the first and third aspects of the invention.

The present invention also relates in a fifth aspect to an iced-based product dispenser comprising a crusher according to the third aspect of the invention.

A sixth aspect of the invention relates to the use of the crusher of the third aspect in an iced-based product dispenser, such as the apparatus of the first aspect.

Preferred embodiments of the invention will be described by way of example only and with reference to the following drawings in which:
Fig. 1 is a schematic view of an ice-based product dispenser;
Fig. 2 is an exploded view of an embodiment of the dispenser;
Fig. 3 is an exploded view of a microwave;
Figs. 4 to 7 show front, side, top and perspective views, respectively, of an embodiment of a movable system;
Fig. 8 is an exploded view of the movable system of Figs. 4 to 7;
Figs. 9 and 10 show side and top views, respectively, of an embodiment of a holding system;
Figs. 11 to 13 show side, front and top views, respectively, of an embodiment of a lifting system;
Fig. 14 is an exploded view of the lifting system of Figs. 11 to 13;
Fig. 15 is a perspective view of another embodiment of a movable system;
Fig. 16 is an exploded view of the movable system of Fig. 15;
Fig. 17 is a perspective view of an embodiment of a holding system and rotation system;
Fig. 18 is an exploded view of the holding system and rotation system of Fig. 17;
Fig. 19 is a perspective view of the holding system of Fig. 17;
Fig. 20 is an exploded view of the holding system of Fig. 17;
Fig. 21 is a perspective view of a lifting system of the movable system of Figs. 15 and 16;
Fig. 22 is an opposite perspective view of the lifting system of Fig. 21;
Fig. 23 is an exploded view of the lifting system of Figs. 21 and 22;
Figs. 24 to 27 show bottom, front, side and top views, respectively, of an embodiment of a crushing and extracting system;
Fig. 28 is an exploded perspective view of the crushing and extracting system of Figs. 24 to 27;
Fig. 29 is an exploded view of an embodiment of an inner housing;
Fig. 30 is a schematic view of an embodiment of a control system;
Fig. 31 is a schematic view of an embodiment of power and control electronics;
Fig. 32 is an illustration of an embodiment of a display and input panel;

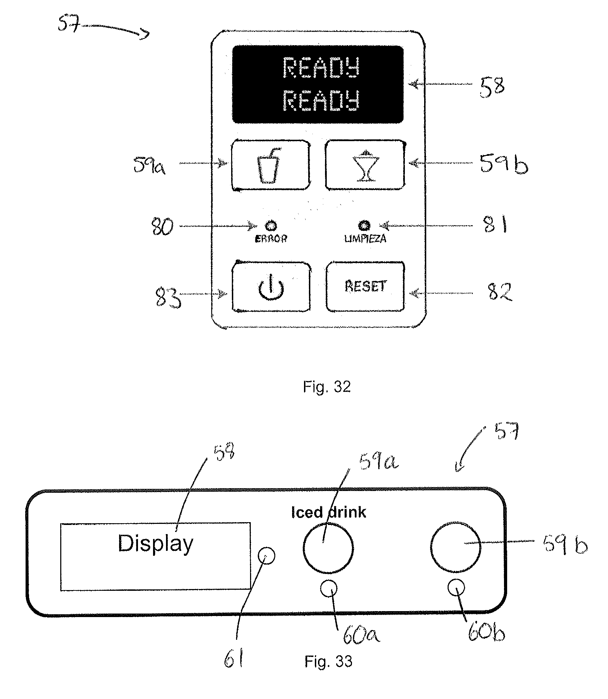

Fig. 32 is an illustration of another embodiment of a display and input panel;

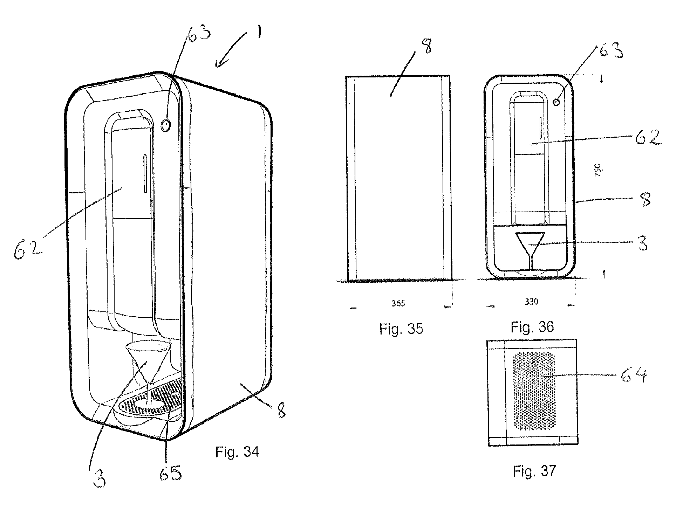

Figs. 34 to 37 show perspective, side, front and top views, respectively, of the dispenser;

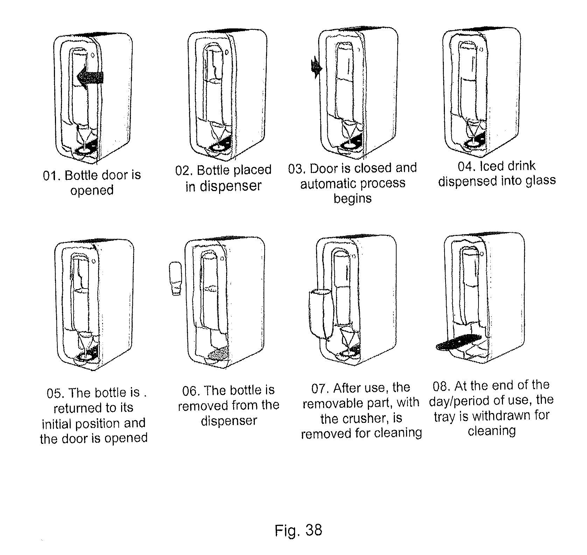

Fig. 38 illustrates how the dispenser is used;

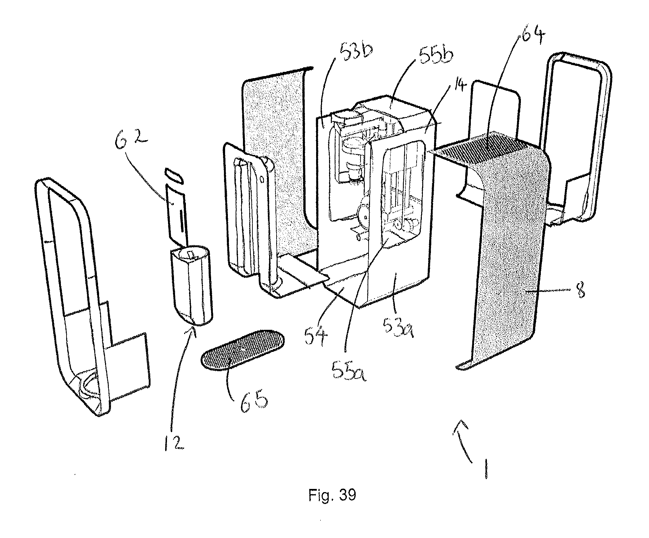

Fig. 39 is an exploded perspective view of the dispenser;

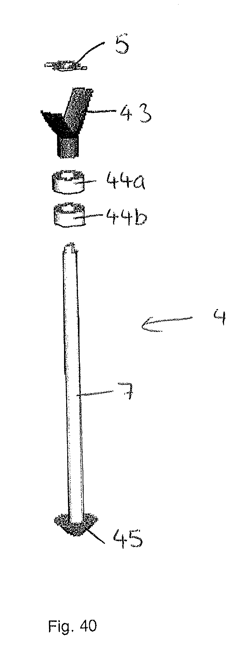

Fig. 40 is an exploded view of an embodiment of a crusher;

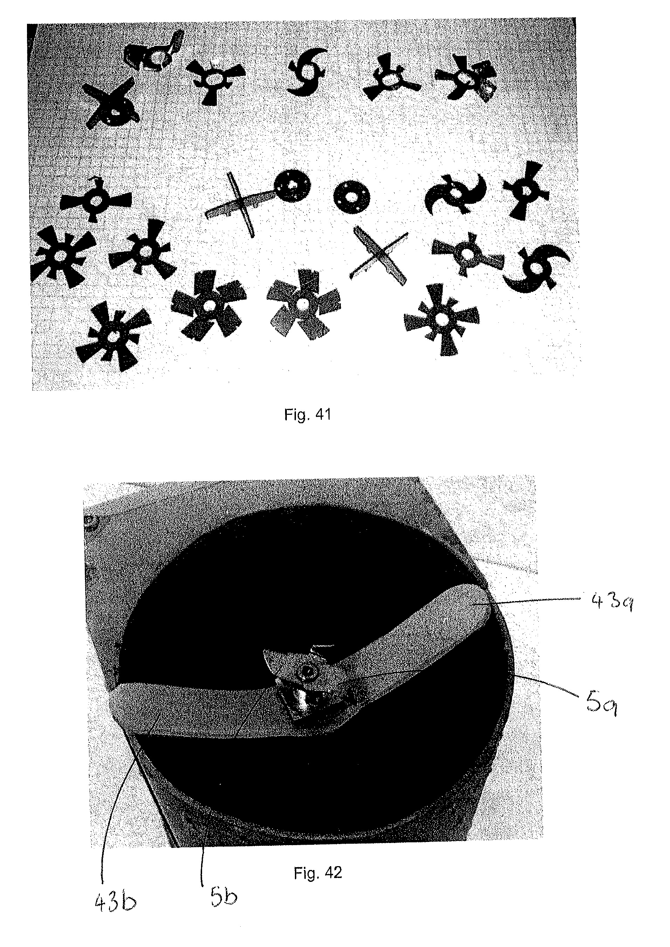

Fig. 41 shows example embodiments of a blade arrangement;
Fig. 42 shows an embodiment of a blade arrangement and extractor;

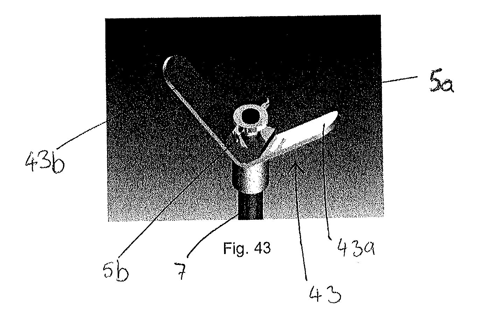

Fig. 43 shows part of another embodiment of a crusher;

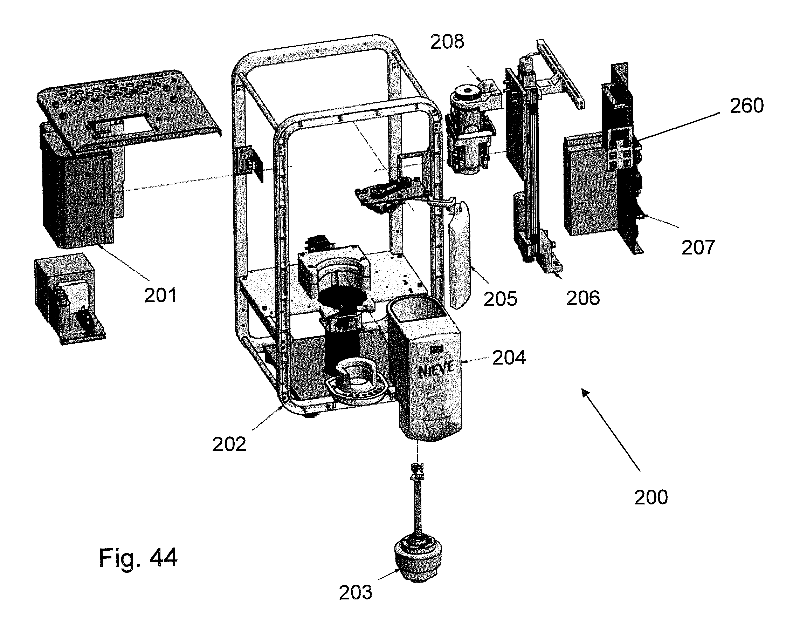

Fig. 44 shows another embodiment of a dispenser in exploded view;

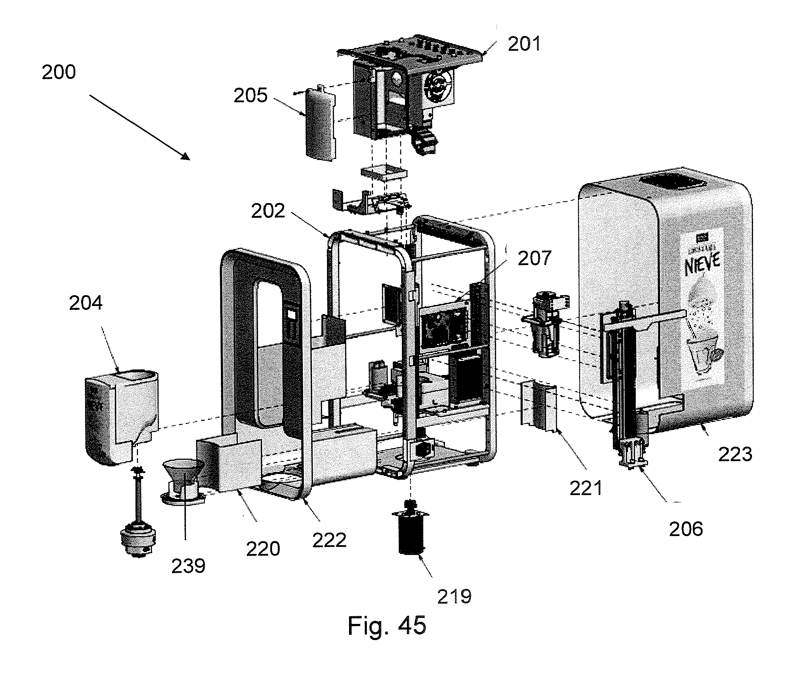

Fig. 45 shows the dispenser of Fig. 44 in exploded view from a different perspective;

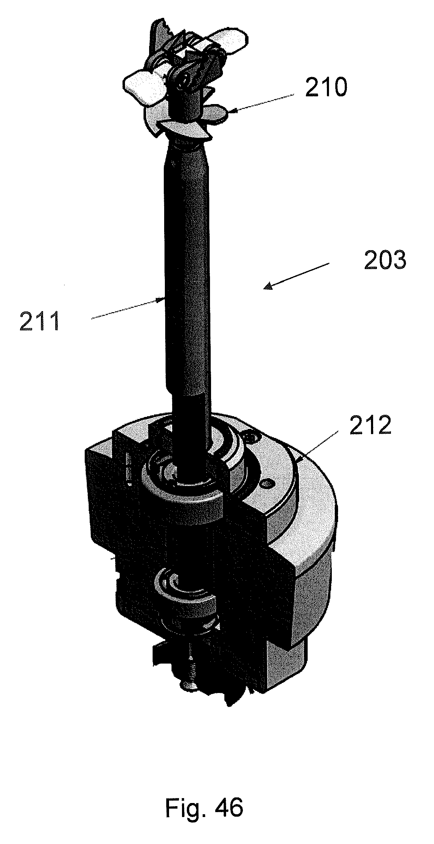

Fig. 46 shows an embodiment of the crusher of the dispenser of Fig. 44;

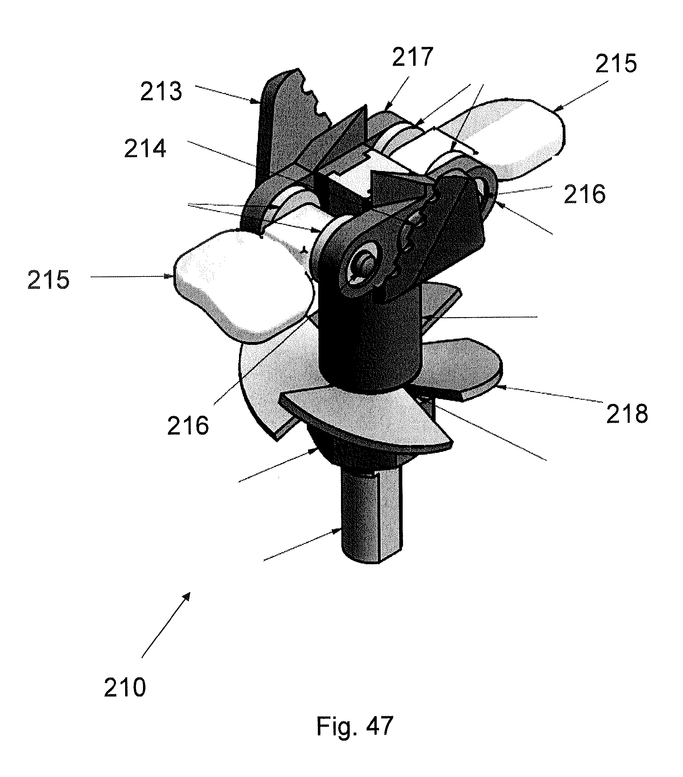

Fig. 47 shows the crusher of Fig. 45 in more detail;

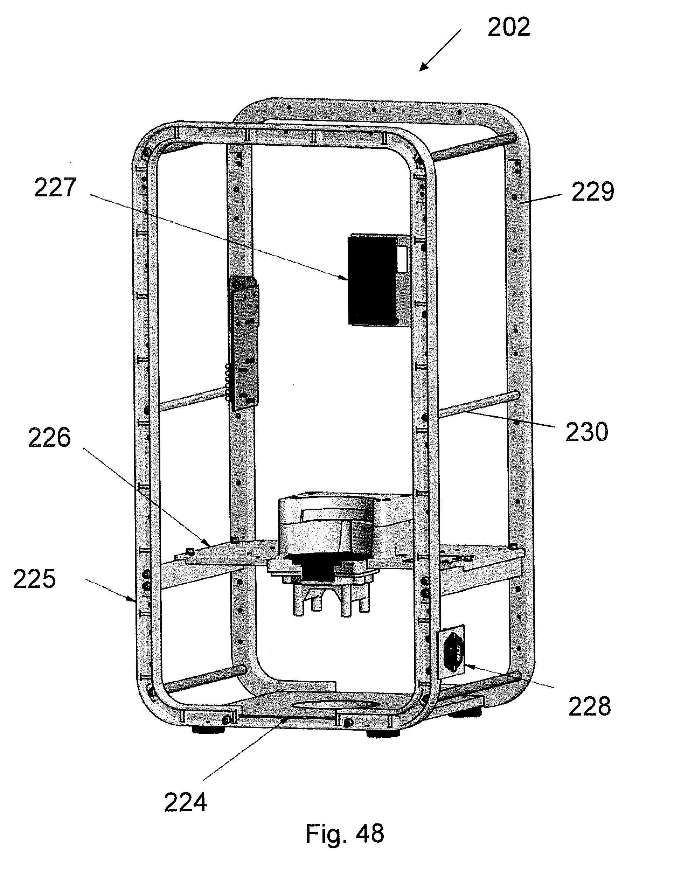

Fig. 48 shows a perspective view of the frame of the dispenser of Fig. 44;

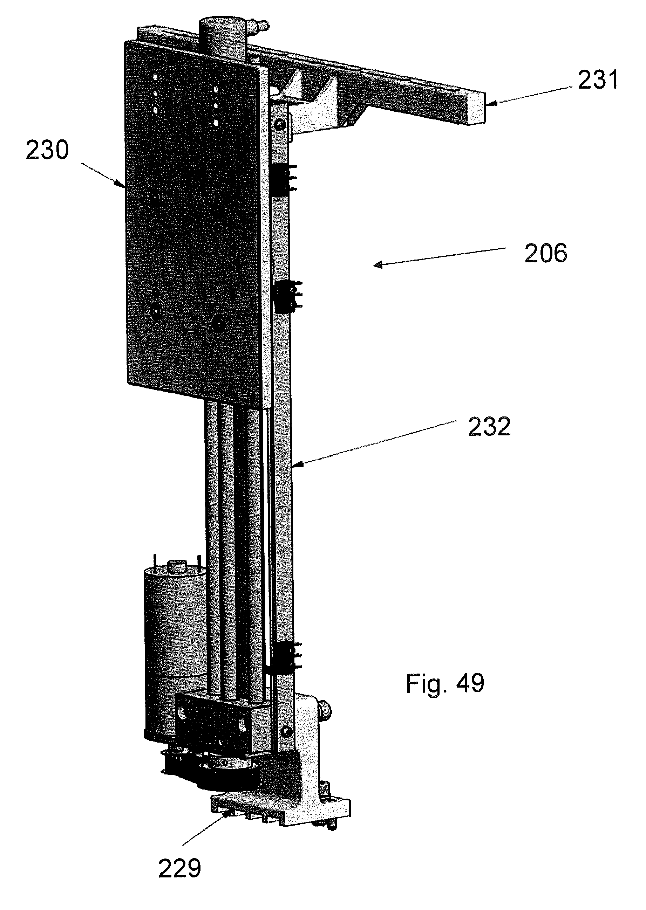

Fig. 49 shows a perspective view of the crushing actuator of the dispenser of Fig. 44;

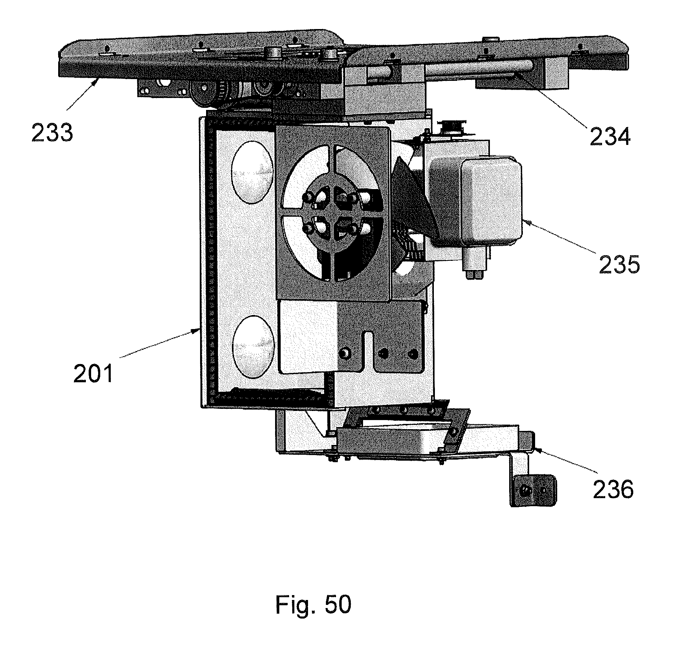

Fig. 50 shows a perspective view of the microwave and associated components of the dispenser of Fig. 44;

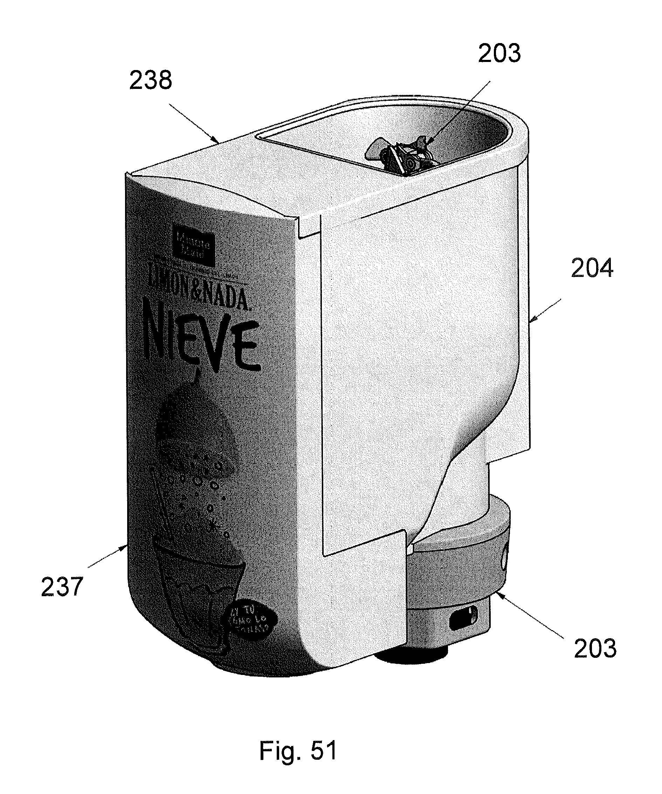

Fig. 51 shows a perspective view of the tray of the dispenser of Fig. 44;

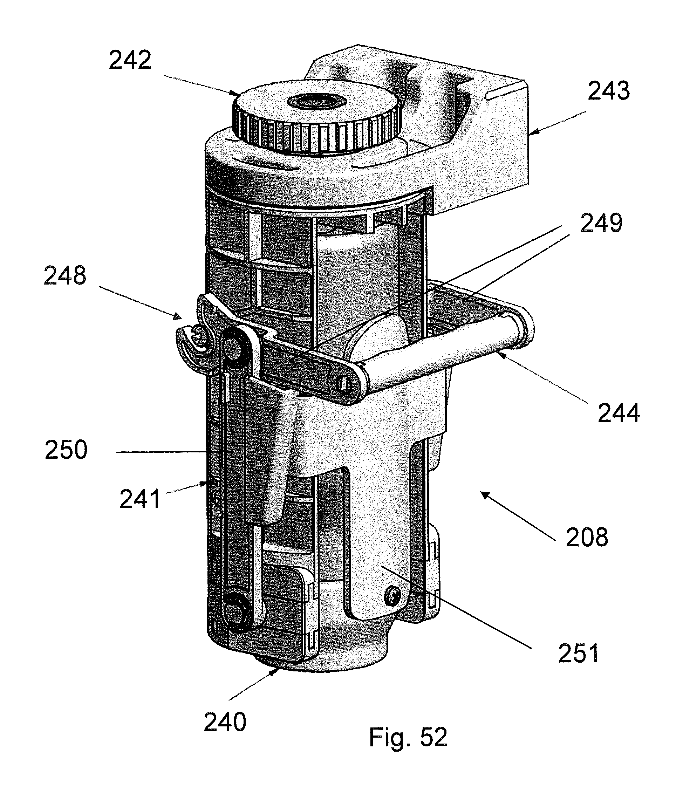

Fig. 52 shows a perspective view of the holder of the dispenser of Fig. 44; and

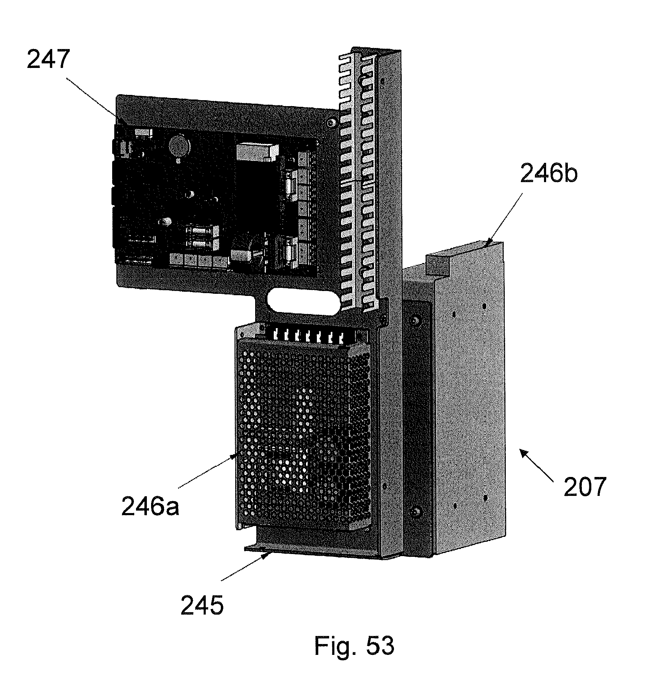

Fig. 53 shows a perspective view of the electronic control board of the dispenser of Fig. 44.

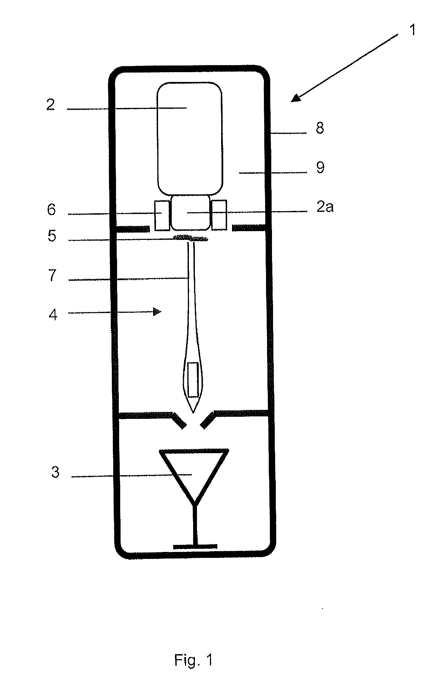

As shown in Fig. 1, an ice-based product dispenser 1 is formed of a housing 8 containing a microwave 9 and a crusher 4. The microwave 9 is provided in an uppermost section of the dispenser 1 and the crusher 4 is provided in a region of the dispenser 1 beneath the microwave 9.

A bottle 2 containing a frozen product, such as a frozen beverage, is held at its neck 2a by a retaining semi-ring 6. In Fig. 1, the bottle 2 is shown located in the microwave 9 although, as will be described below, after heating in the microwave 9, the bottle 2 is made to move from the microwave 9 towards the crusher 4.

The crusher 4 comprises a crushing arm 7 and a blade arrangement 5 and, after the contents of the bottle 2 has been heated by the microwave 9, the bottle 2 is moved such that the crusher 4 is inserted into the bottle 2 to crush and then extract the frozen product and allow it to fall into a removable receptacle 3.

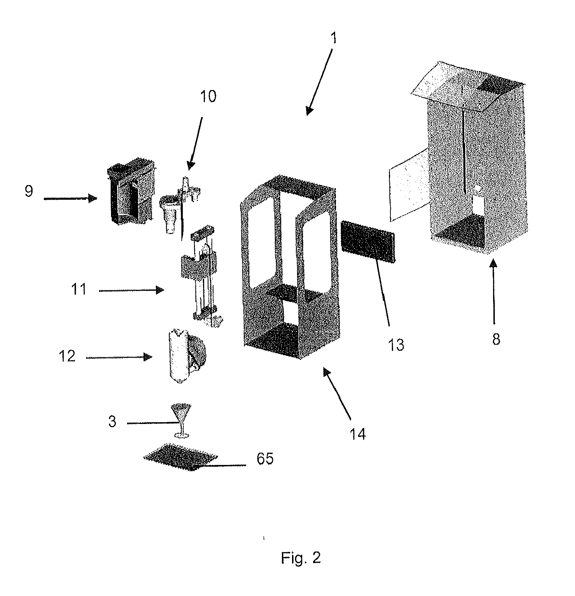

Fig. 2 shows an exploded view of an embodiment of the dispenser 1 in which it is broken down into its different functional systems: the microwave 9, a movable system 10, a lifting system 11, a crushing system 12, and a control system 13.

A waste tray 65 is provided beneath the crushing system 12 and the receptacle 3. The waste tray 65 provides for collecting any spilt product as well as a support on which the receptacle 3 may be placed. Once crushing is completed, the product is extracted from the bottle 2 and dispensed with the crushing system 12 into the receptacle 3.

The systems are encased by an inner housing structure 14 and an outer housing cover 8. The inner housing structure 14 provides the dispenser 1 with structural rigidity and strength whilst the outer housing cover 8 is provided primarily for aesthetic reasons, although it also helps to keep the inner components clean from dust etc.

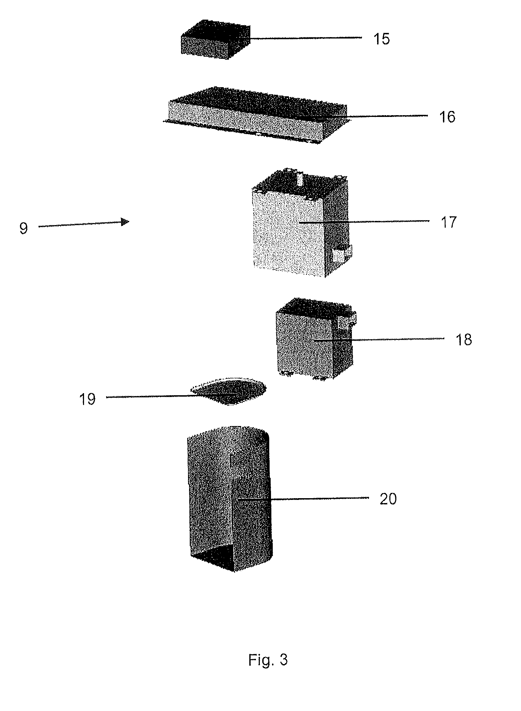

Fig. 3 shows the components of the microwave 9 in exploded view. The microwave 9 comprises a fan 15, a wave guide 16, a magnetron 17, a transformer 18, a removable waste tray 19 and a resonance box 20. During heating, the bottle 2 is located in the resonance box 20. The waste tray 19 is positioned in the bottom of the resonance box 20 and collects any waste product that may spill from the bottle 2 during moving and/or heating.

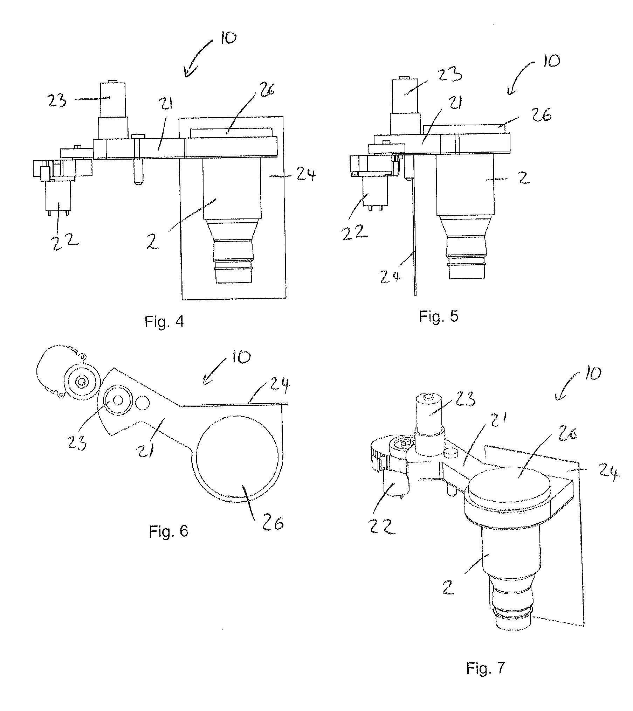

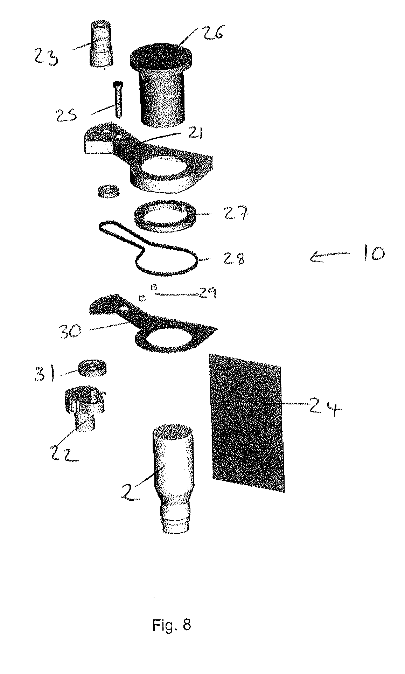

The movable system 10 is shown in Figs. 4 to 8.

The purpose of the movable system 10 is to move the bottle 2 horizontally within the dispenser 1 such that the bottle is moved in and out of the microwave 9 and about the crusher 4 during crushing and extraction. The movable system 10 achieves this by providing two kinds of rotational movement of the bottle 2: (i) rotation of the bottle 2 about its longitudinal axis; and (ii) rotation of the bottle 2 with respect to a vertical axis other than the longitudinal axis of the bottle itself.

The movable system comprises a motor 23, an axis arm cam 25, an arm 21, a pulley 27, a strap 28, bushing 29, a bottom arm 30, an off centre gear 31, a reducer motor 22 and a cover 24. The pulley 27, strap 28 and bushing 29 are encased by the arm 21 and bottom arm 30. The arm 21 and bottom arm 30 each have an enlarged end with an opening therein in which a bottle holder 26 is located. The bottle 2 is held by the bottle holder 26 in an inverted position (i.e. up-side-down). The cover 24 is attached to the arm 21 and covers the bottle 2 when it is in the dispenser 1 and forms a final wall of the resonance box 20 when the bottle 2 is held in the microwave 9.

The bottle 2 is made to rotate about its own longitudinal axis by the motor 23, which drives the strap 28 to move around the pulley 27, thereby causing the bottle holder 26 and hence the bottle 2 to rotate.

Off-centring, or rotation of the bottle 2 with respect to a vertical axis other than the longitudinal axis of the bottle itself, is provided by the reducer motor 22, which causes the arm 21 to rotate about an axis of the motor 22, thereby allowing the longitudinal axis of the bottle 2 to be moved such that it is not co-linear with that of the crusher 2. The motion provided in this way allows the bottle 2 to move both in and out of the microwave 9 and about the crusher 2.

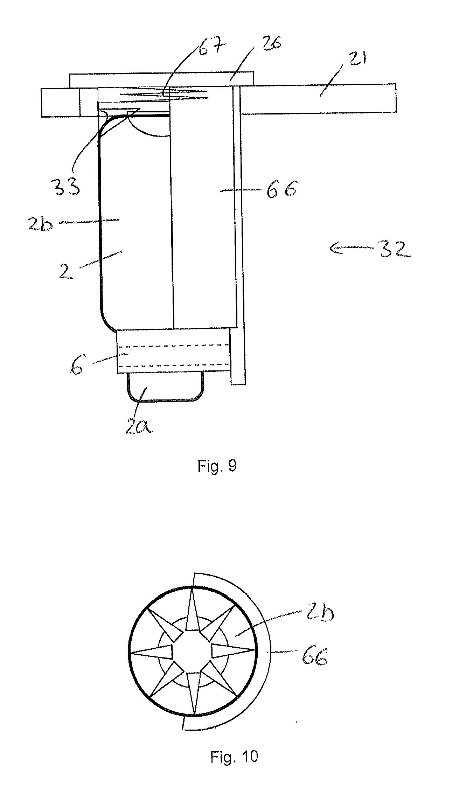

The bottle 2 is held in place with a holding system 32, as illustrated in Figs. 9 and 10. The holding system 32 comprises the bottle holder 26 for holding the bottom 2b of the bottle 2 and a semi-ring 6 for holding the neck 2a of the bottle 2. The bottle holder 26 and semi-ring 6 are joined by a curved support wall 66.

The semi-ring 6 is a ring with a gap provided therein to allow insertion of the bottle neck 2a from the front of the dispenser 1. The bottle body 2b can then rest on the semi-ring 6.

The bottle holder 26 is located in an opening 33 in the arm 21 of the movable system 10. The bottom of the bottle 2 is inserted into the opening 33 and held by the bottle holder 26. The bottle holder 26 has grips (not shown) which are arranged to insert into standard slots in the bottom of the bottle 2. A spring 67 applies pressure on the grips against the bottle 2 via a plunger (not shown), forcing the bottle 2 towards the semi-ring 6 and thereby holding it in place.

The holding system 32 is arranged such that a user can insert a bottle 2 into the dispenser 1 with a single hand and does not have to apply much force. The holding system 32 holds the bottle 2 with sufficient grip such that it does not rotate with respect to the holder 26 during crushing (although, as described above, the holder 26 itself is made to rotate by the movable system 10).

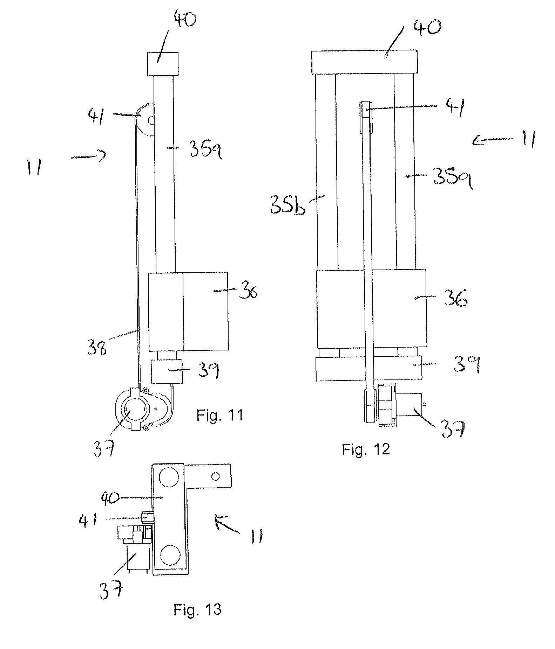

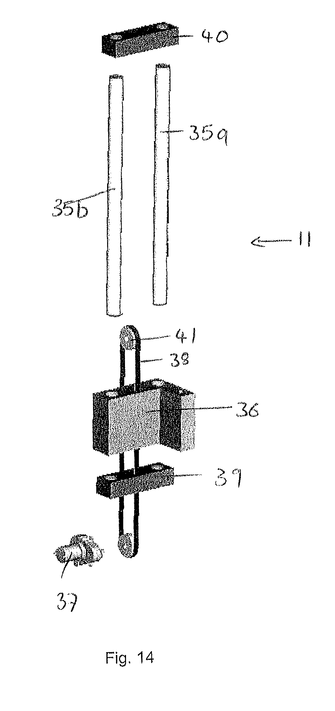

The lifting system 11 is illustrated in Figs. 11 to 14. The purpose of the lifting system 11 is to move the bottle 2 vertically within the dispenser 1, between the microwave 9 and the crushing system 12, and about the crushing system 12 to allow crushing and extraction of the product.

The lifting system 11 has a pair of vertical guide columns 35a, 35b and a movable carriage 36. The movable carriage 36 has a pair of openings therein such that it can slide along the guide columns 35a, 35b. A motor 37 causes a strap 38 to rotate about a pulley 41. The movable carriage 36 is attached to the strap 38 such that when the strap 38 moves, the carriage 36 moves vertically along the guide columns 35a, 35b. The guide columns 35a, 35b are held by top and bottom members 40, 39.

The movable system 10 is attached to the movable carriage 36 of the lifting system 11.

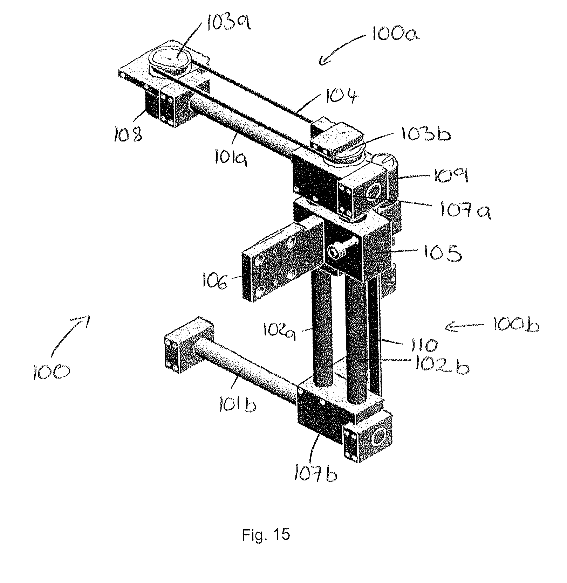

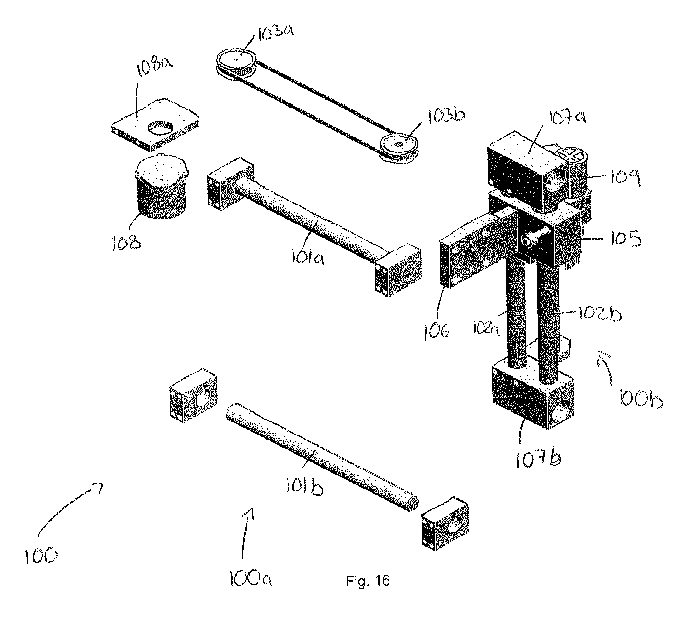

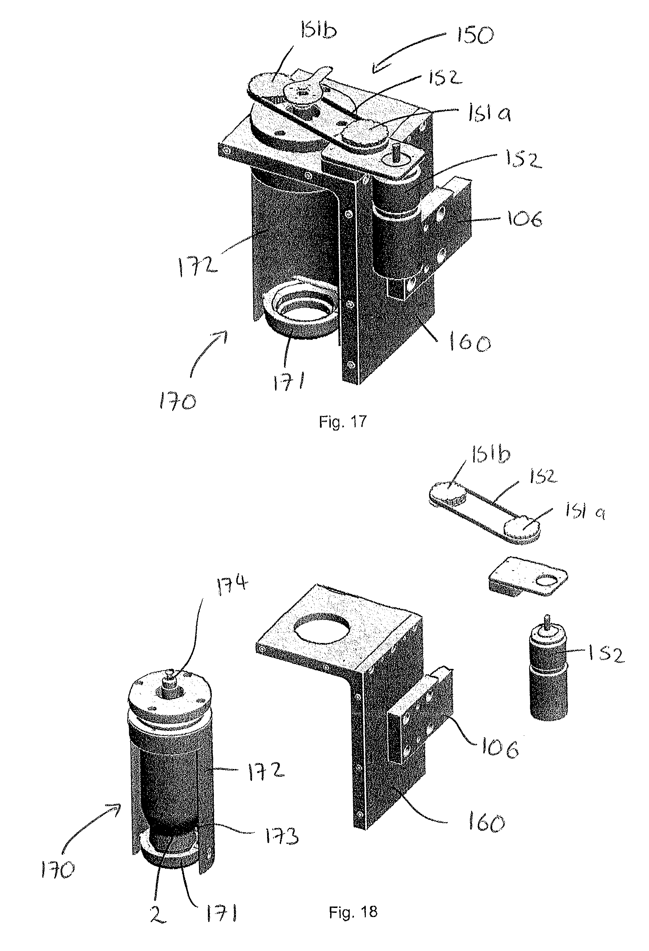

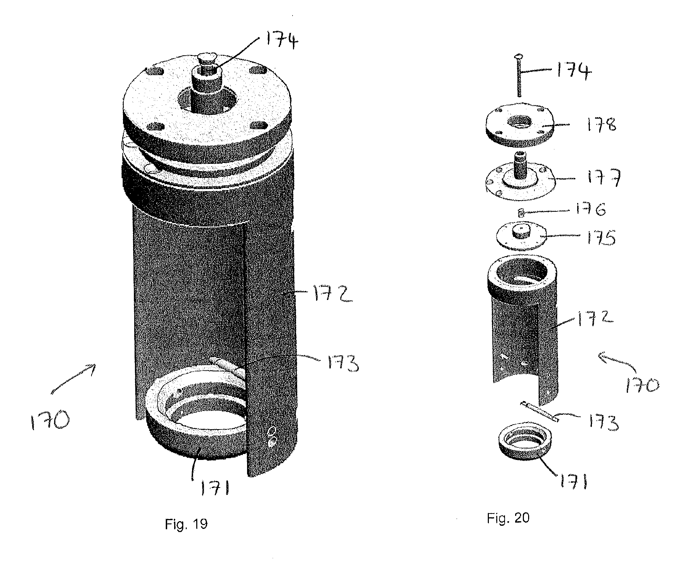

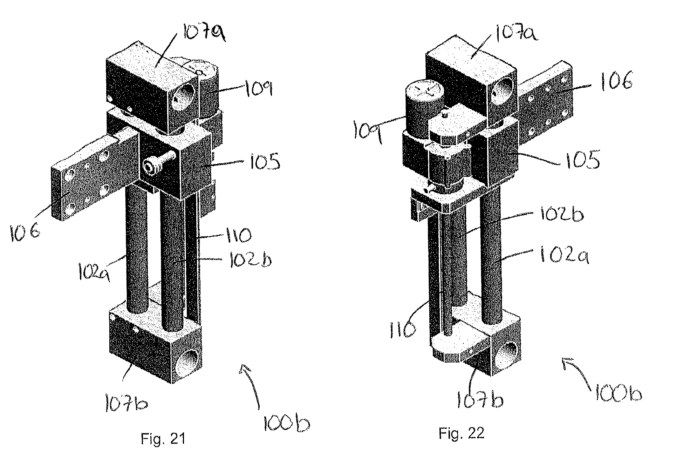

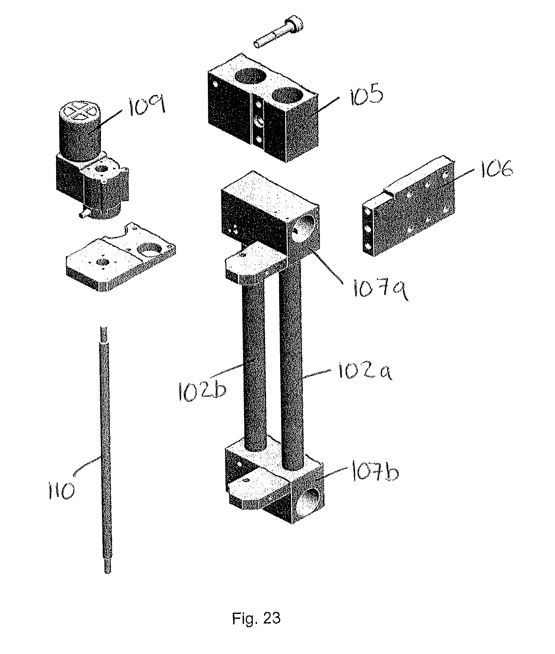

In an alternative embodiment, instead of movable system 10 and lifting system 11, movable system 100 and rotation system 150 are provided. These are shown in Figs. 15 to 23.

The movable system 100 provides both horizontal linear and vertical linear motion of the bottle 2 within the dispenser. Thus, it can move the bottle 2 in and out of the microwave 9, between the microwave 9 and crusher 4, and both vertically and horizontally about the crusher 4.

The movable system 100 comprises a first part 100a, which provides horizontal linear motion, and a second part 100b, which provides vertical linear motion.

The first part 100a comprises upper and lower rails 101 a, 101 b, pulleys 103a, 103b, strap 104, motor 108 and motor support 108a. The motor 108 causes pulley 103a to rotate, thereby causing the strap 104 to move around pulleys 103a and 103b. This in turn causes upper and lower carriages 107a and 107b, which are joined by vertical rails 102a and 102b, to move horizontally along the upper and lower rails 101 a and 101 b, respectively.

The second part 100b comprises the rails 102a and 102b, motor 109 and worm gear 110. The motor 109 drives the worm gear 110 which causes carriage 105 to move vertically along vertical rails 102a and 102b.

Support 106 is attached to carriage 105.

The rotation system 150 provides rotational motion of the bottle 2 about its own longitudinal axis. Such rotation is provided during crushing and extraction of the product from the bottle. It can also be provided during heating in the microwave 9.

The rotation system 150 and a bottle holder 170 are attached to support 106.

The rotation system 150 comprises cogs 151a, 151b, strap 152, motor 152 and axel 174. The motor 152 drives cog 151 a which causes the strap 152 to drive cog 151b. This in turn causes an axel 174 to rotate. Axel 174 is attached to bottle holder 170 such that when axel 174 rotates, so does bottle holder 170, and so does the bottle 2 which is held by the bottle holder 170.

The bottle holder 170 comprises a ring 171 for supporting the neck of the bottle 2, side cover 172, an axel 173, the support 175, spring 176, bracket 177 and bearing box 178.

The neck of the bottle 2 rests of ring 171. Ring 171 has a thread on its inner circumference into which the neck of the bottle 2 may be screwed in place. The bottom of the bottle 2 is held by support 175. Pressure is applied on the bottle 2 towards the ring 171 by spring 176 acting on support 175. This helps to hold the bottle in place.

The axel 173 supports the ring 171 whilst allowing the ring 171 to rotate about the axis of the axel 173. This means that the ring 171 can be tilted to make it easy for a user to insert and screw the bottle 2 into the ring 171.

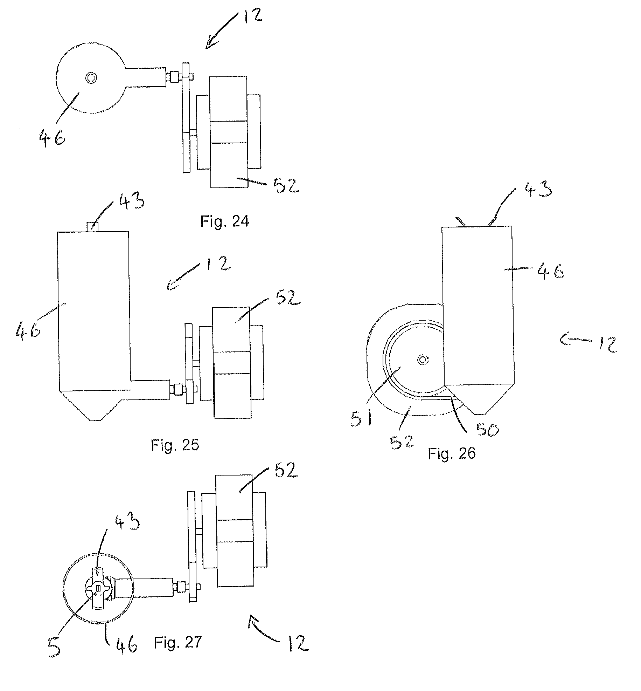

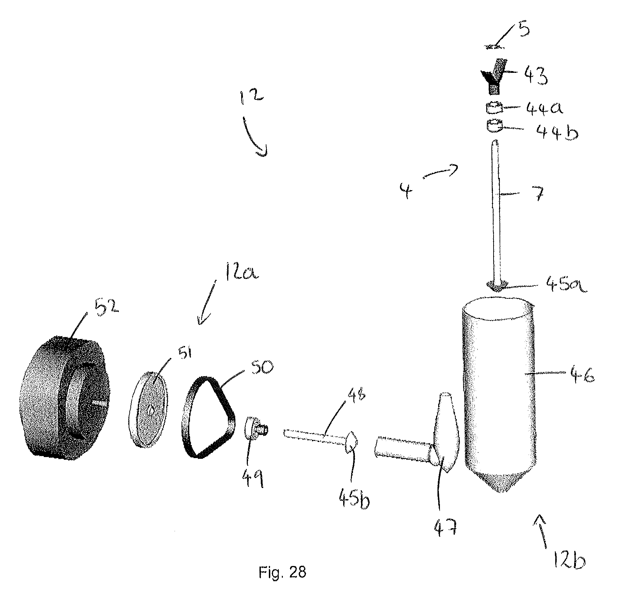

The crushing and extracting system 12 is illustrated in Figs. 24 to 28. The purpose of the crushing and extracting system 12 is to crush and extract the product from the bottle 2.

The crushing and extracting system 12 comprises the crusher 4 (which is shown in more detail in Fig. 40), which itself comprises a blade arrangement 5 and an extractor 43 attached to a crushing arm 7. The blade arrangement 5 and crushing arm 7 are made of stainless steel. The extractor 43 is made of a plastic, rubber or silicone. The plastic is any plastic suitable for use in the food industry. In an alternative embodiment, the extractor 43 is made of a metal mesh and coated with plastic, rubber or silicone. The extractor 43 is flexible and resilient such that it can conform to the sides of the bottle and facilitate extraction of the crushed product.

The crushing and extracting system 12 is formed of two parts: a fixed part 12a which is fixed in the dispenser 1 and comprises an motor 52, an motor output pulley 51, a transmission strap 50, a transmission pulley 49; and a removable part 12b comprising a transmission axel 48, transmission gears 45a and 45b, a transmission cover 47, a funnel 46 and the crusher 4. The removable part 12b can be removed after the dispenser 1 has been used so that it can be cleaned.

The motor 52 causes pulley 51 to rotate, which drives strap 50 which causes pulley 49 to rotate. This causes the transmission axel 48 and transmission gear 45b to rotate. Transmission gear 45b links into transmission gear 45a to turn rotation about a horizontal axis into rotation about a vertical axis. Transmission gear 45a is provided on a lower end of the crushing arm 7. Thus, when transmission gear 45b rotates, crushing arm 7 and hence the whole crusher 4 rotates about its vertical axis. The transmission gears 45a and 45b and the transmission axel 48 are protected by the transmission cover 47.

The funnel 46 surrounds at least part of the crusher 4 and is slightly larger in diameter than the bottle 2. During crushing and extraction the bottle 2 is at least partially located in the funnel 46. During extraction, the funnel 46 directs the ice-based product from the bottle 2 into the receptacle 3.

As described above, the crusher 4 comprises a blade arrangement 5. Some example blade arrangements are shown in Fig. 41.

Figs. 42 and 43 show two embodiments of a crusher 4 with an extractor 43 formed of a pair of resilient plastic arms 43a, 43b, blade arrangements 5, each comprising a pair of crushing blades 5a, 5b, and arm 7. In both embodiments, the plastic arms 43a, 43b are substantially longer than the crushing blades 5a, 5b.

In one embodiment, the following automated motion of the bottle 2 is caused after the bottle 2 has been inserted into the dispenser 1 by a user. First, the bottle 2 is rotated laterally about a vertical axis into the microwave 9 by the movable system 10. Then, after the microwave 9 has heated the contents of the bottle 2 by a specified amount (e.g. for a specified duration at a specified power), the bottle 2 is rotated out of the microwave 9 and back to its original position, again by the movable system 10. Next, the bottle 2 is lowered by the lifting system 11 to the crushing system 12, such that the crusher 4 is located inside the bottle 2, and the bottle 2 is moved slightly off-centre from the axis of the crusher 4 by the movable system 10. The blade arrangement 5 of the crusher 5 then starts rotating inside the bottle 2, at a position off-centre from the longitudinal axis of the bottle 2 , in order to crush the product. At the same time, the bottle 2 is also made to rotate about its own longitudinal axis by the movable system 10, and to move up and down by the lifting system 11, such that the blade arrangement 5 traces a generally helical path within the bottle 2. In this way, crushing of the frozen product within the bottle 2 is optimised. In addition, since the crushing arm 7 and the blade arrangement 5 and extraction element 43 are off-centre with respect to the longitudinal axis of the bottle 2, once the frozen product has been crushed it can be extracted easily out of the bottle 2 and into the receptacle 3.

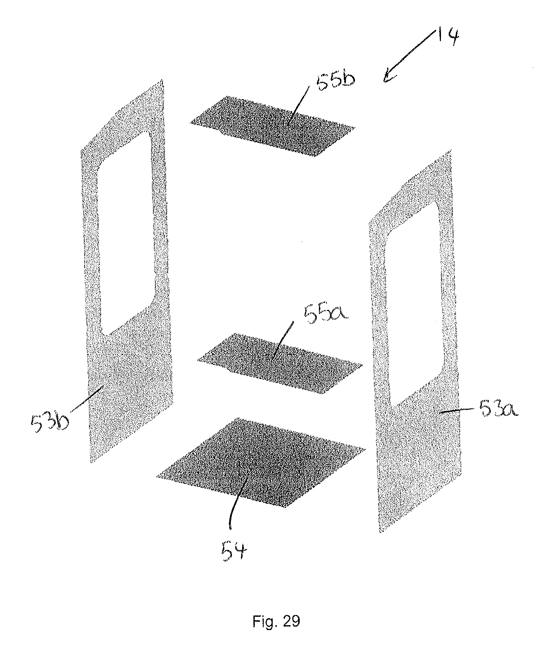

The inner housing 14 is illustrated in Fig. 29. The purpose of the inner housing 14 is to provide support for the entire dispenser 1. It is formed of stainless steel side plates 53a, 53b, which are joined by stainless steel ledges 55a, 55b and bottom 54. The parts 53a, 53b, 55a, 55b are joined together by screws, rivets or welding. The side plates 53a, 53b have openings therein to reduce the overall weight of the inner housing 14. The inner housing 14 is symmetrical about a vertical axis when viewed from the front. In use, the inner housing 14 is not visible as it is enclosed by housing cover 8 (see Fig. 39).

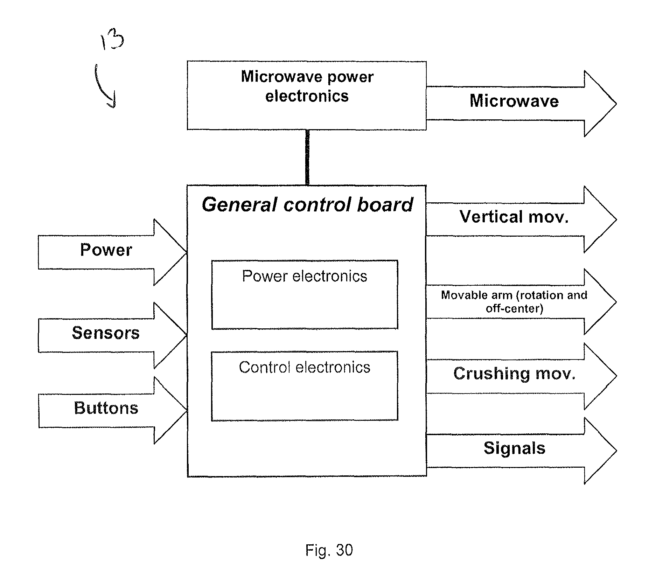

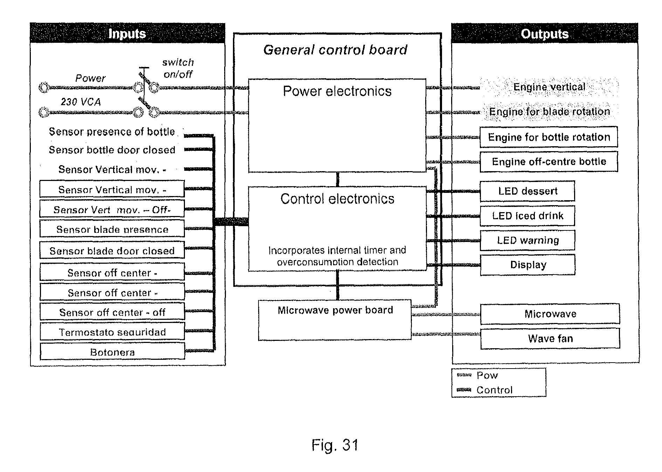

The control system 13 is shown in Figs. 30 and 31. The control system 13 responds to input from an input panel 57 (either that of Fig. 32 or that of Fig. 33) and controls the microwave 9, the movable system 10, the lifting system 11 and the crushing system 12. In addition, the control system 13 controls indicators on the exterior of the dispenser 1 for indicating the status of the dispenser 1.

The control system 13 is provided, at least in part, on a printed circuit board (PCB). The PCB has power and control parts and because the PCB handles low powers these parts can be unified in a single board.

The control system 13 is programmable such that various parameters of the dispenser 1 (e.g. heating power and time, crushing time, describing the motion of the movable and lifting systems) can be set.

The entire dispenser 1 operates at 220V and the required transformers are integrated with the exception of the transformer in the microwave 9.

As shown in Fig. 31, the PCB receives power. The control system 13 also receives inputs from sensor(s) detecting the presence of a bottle 2 in the dispenser, one or more sensors detecting whether a bottle door is open or closed, one or more sensors relating to the lifting and movable systems (whether they are in standby, at a maximum/minimum position, at an off-centre position), one or more sensors detecting the presence of the removable part 12b, one or more sensors detecting whether an internal blade door (not shown) is closed, one or more sensors detecting whether the bottle 2 is off-centre with respect to the crusher 4 or the microwave 9, and a security thermostat. Based on these inputs, the control system 13 controls the microwave 9 and the movable, lifting and crushing systems 10, 11, 12. It also controls LEDs for displaying whether the output is to be a dessert or an ice-based beverage, or a warning indicating that the dispenser 1 is not working properly. In some embodiments, the control system 13 also controls a display 58 showing what kind of product is being dispensed and, optionally, the status or time until dispensing will be complete.

In some embodiments, the control system 13 has a timer for timing the period between cleans so that a user can be alerted (e.g. via an LED on a display panel) when the dispenser, particularly the removable part 12b, requires cleaning. The removable part 12b will require cleaning if the dispenser 1 has not been used for more than a specified period of time.

An embodiment of a display and input panel 57 is shown in Fig. 32. This has a display 58 for displaying the status of the dispenser 1. Two buttons 59a, 59b of the capacitance type are provided for selecting the desired product (beverage or dessert). LED 81 indicates if cleaning is required. LED 80 indicates if there is an error. Button 83 is used to turn the dispenser 1 on and off. Button 83 is used to reset the dispenser 1 in case of an error.

Another embodiment of a display and input panel 57 is illustrated in Fig. 33. The panel 57 has two buttons 59a, 59b which are also of the capacitance type, for selecting the desired product (beverage or dessert). LEDs 60a and 60b indicate which selection has been made. LED 61 indicates if the dispenser 1 is on. The display 58, which is optional, is backlit, for example in blue. The panel 57 is connected to the PCB with an electrical cable, not shown. The buttons 59a, 59b are sensitive to a user's touch and have a good tolerance to humidity. They operate from 2.8 VDC to 5.0 VDC and draw only 15 microamps in a low power consumption mode.

Figs. 34 to 37 and 39 show the ice-based product dispenser 1 from the outside and in exploded form. On the front of the dispenser 1 is an LED 63 which indicates whether the dispenser is on (LED is on) or off (LED is off). In addition, there is a door 62 which a user opens so that they can insert a bottle 2 into the holding system 32 of the dispenser 1.

A further door (not shown) is provided inside the dispenser 1 to allow the bottle 2 to descend to the crusher 4. This door is opened and closed automatically, when required, by the control system 13.

Operation of the dispenser 1 will now be described with reference to Fig. 38. Operation consists of eight main steps, as shown in Fig. 38

First (step 01), the door 62 is opened by a user.

Then (step 02) the user inserts the bottle 2 into the dispenser 1 such that the bottle 2 is held by the holding system 32 as described above. The bottle 2 is inserted into the dispenser 1 in an inverted position (i.e. up-side-down) and with its lid already removed. Since the product in the bottle 2 is frozen, it should not fall out of the bottle 2, being held in place by virtue of the bottle 2 having, as is usual for bottles, a neck 2a that is narrower than its body 2b.

At step 03, the user closes the door 62 and the automatic process of producing the ice-based product begins. During this process, the bottle 2 is heated in the microwave 9 such that its contents attains the appropriate consistency for the selected product (beverage or dessert). Then, the crusher 4 is inserted into the bottle 2 (by moving the bottle 2 over the crusher 4) to crush the frozen product and extract it using the extractor 43.

Then, at step 04, the ice-based product (beverage or dessert) is extracted out of the bottle 2 with the extractor 43, through the funnel 46 into a receptacle 3 which is positioned beneath the crusher 4.

The bottle 2 is then returned to its initial position and the door 62 is opened (step 05).

At step 06, the user removes the bottle 2 from the dispenser 1 and the dispensing process is ended.

At step 07, the removable part 12b, which comprises the crusher 4, is removed for cleaning. This step (07) should be performed after each time the dispenser 1 is used, or after a specified period of time during which the dispenser 1 has not been used.

At step 08, at the end of the day or at the end of one time period of use, the tray 65 is removed for cleaning of any excess fluid contained therein. The microwave 9 should also be cleaned if needed.

Based on two different settings of the microwave 9, the dispenser 1 can produce products of two different textures: dessert and beverage. The dessert product has a more solid consistency than the beverage product.

A freezer (not shown) can be provided with the dispenser 1. The freezer has capacity for at least 24 bottles. Each bottle contains 500 ml of the product. In another embodiment, each bottle contains 275 ml of the product. The product is lemon flavoured, but other flavours may of course be used, and does not contain any preservatives. The dispenser 1 is compact and its height is no greater than 550 mm. After a bottle 2 is inserted into the dispenser 1, the crushed ice product is dispensed within 1.5 minutes.

The freezer has a first-in-first-out (FIFO) system such that bottles that have been in the freezer the longest are those that are removed first. The freezer has an opaque door which opens along a vertical axis. The door is not made of glass in order to improve efficiency and reduce the formation of condensation. The freezer can contain at least 24 bottles where the bottles have a diameter of 60 mm and a height of 160 mm. It takes 12 to 18 hours for the freezer to freeze the product contained within the bottles. The freezing temperature is between -18 and -22°C.

In one embodiment, the FIFO system is formed of drawers, similar to those in a typical vending machine, which are slidable such that they can be drawn out of the freezer to facilitate the loading of the product at the rear end of the drawers. This allows entry of the product always behind the product that is already frozen and also allows a user to easily remove the product from the front of the drawer that has been in the freezer the longest.

In an alternative embodiment, the freezer comprises fixed shelves formed in two levels joined at a rear end of the freezer. The higher level shelf is for loading the unfrozen product and the lower shelf allows removal of the products that are already frozen. The upper shelf slopes downwards from the front to the back of the freezer and the lower shelf slopes downwards from the back to the front of the freezer, such that the bottles slide/roll from the front to the back of the top shelf and from the back to the front of the lower shelf as bottles are removed from the lower shelf.

While the invention has been described with reference to exemplary embodiments, it will be understood by those skilled in the art that various changes may be made without departing from the scope of the invention. In addition, many modifications may be made to adapt a particular situation to the teachings of the invention without departing from the scope thereof. Therefore, it is intended that the invention not be limited to the particular embodiment(s) disclosed, but that the invention will include all embodiments falling within the scope of the appended claims.

Figs. 44 and 45 show another embodiment of a dispenser 200 in exploded view. In this and the following figures, only the main differences with respect to the previous embodiments will be explained in detail. Other aspects of the above embodiments apply equally for this and the following figures.

The main functional parts of the dispenser 200 are a microwave 201, a frame 202, a crusher 203, a tray 204, an automatic door 205, a crusher actuator 206, an electronic control board 207 for controlling the dispenser, a bottle holder 208, a crusher motor 219.

The main structural parts of the dispenser 200 include a motor support cover 220, a rear cover 221 for the crusher 203, a front cover 222 and a back and side cover 223.

A touch-screen 260 is provided on the front of the dispenser for controlling its operation. The touch-screen 260 has a number of touch-sensitive capacitor buttons and a graphical display screen. The touch-screen 260 is connected to the electronic control board 207.

When a process is initiated, the door 205 opens automatically, allowing a bottle containing a frozen product to be inserted into the bottle holder 208. The door 205 is made of plastic for easy cleaning. An electric motor controls the movement of the door 205.

In the dispenser 200, the microwave 201 can be moved linearly horizontally to and from the bottle holder 208 for heating the contents of a bottle, and the holder 208 can be moved linearly vertically between the microwave 201 and the crusher 203 along the crusher actuator 206.

The dispenser 200 is covered by a fibreglass cover 222, 223, which is formed without any joints. This makes it more hygienic and also reduces the cost of the moulds required. Further, it increases the robustness of the cover and improves its overall quality. It is also easy to mount and dismount it when needed for maintenance, for example. The base of the cover 223 is formed from a tough engineering plastic with very low deformation properties.

Figs. 46 and 47 show the crusher 203 in more detail.

The crusher 203 has a crushing arrangement 210 attached to an end of a crushing arm 211. The crushing arrangement 210 and arm 211 are caused to rotate by a 24V DC motor provided in a case 212.

The crushing arrangement 210 has a pair of fixed crushing blades 213 with serrated edges 214. It also has a pair of pointed blades 217 (i.e. blades with a single point) arranged radially inside the serrated blades 213. The blades 213 and 217 are arranged opposite each other across the longitudinal axis of the crusher 203.

A pair of paddles 215 are also arranged opposite each other across the longitudinal axis of the crusher 203. The paddles 215 are arranged at 90° with respect to the blades 213 and 217.

The paddles 215 can freely tilt up and down via an axel 216 as the speed or rotation of the crusher changes. In Figs. 46 and 47, the paddles 215 are shown in their uppermost position and are maintained in that position due to the centripetal force caused by the rotation of the arm 211. At lower speeds of rotation, the paddles 215 may be maintained at shallower angles (e.g. less than 90°with respect to the arm 211). When there is no rotation of the arm 211, the paddles 215 may fall down to a position parallel or substantially parallel with the arm 211.

The paddles 215 are substantially blunt, i.e. they do not comprise a sharp edge. The paddles 215 are arranged to churn and crush the product in the container.

The paddles 215 each have a flat part and an angled part, where the angled part is arranged at a trailing end of the paddle with respect to a direction of rotation. The angled part is arranged such that it extends downwardly from the flat part when rotating inside the container.

The crusher 203 also has four extractor blades 218 in the form of a propeller which are arranged rotationally symmetrically about the longitudinal axis of the crusher 203 and are angled with respect to the longitudinal axis of the crusher 203 such that, when they rotate, the extractor blades 218 force the crushed product down and out of the container.

The entire crushing arrangement 210 is made of stainless steel except the paddles 215 which are made of titanium due to its higher durability and the increased forces which the paddles 215 have to withstand. The extractor blades 218 are also made of stainless steel.

Fig. 48 shows the frame 202 in more detail. The frame 202 is formed from a substantially rectangular front frame 225 and a corresponding substantially rectangular back frame 229 which are rigidly held apart by a number of horizontally extending struts 230. A bottom plate 224 is located at the bottom of the frame 202 to give stability to the dispenser 200. A base plate 226 is provided part-way up the dispenser 200. A display support 227 is attached to the front frame 225 near the top of the frame 202. An IEC connector 228 is attached to the front frame 225 near the bottom of the frame 202. The frame 202 provides structural strength to the dispenser 200.

Fig. 49 shows the crusher actuator 206 in more detail. The crusher actuator 206 comprises a rear support 229, a microwave cover 230, a fixing element 231 and a linear actuator 232. The fixing element 231 is for fixing the actuator 206 to the frame 202. The microwave cover 230 can be made to move up and down the linear actuator 232 by a motor.

As shown in Fig. 44, the holder 208 is attached to the microwave cover 230. When the holder 208, holding a bottle, has been made to move up the linear actuator 232 to the microwave 201, the microwave cover 230 is positioned such that the holder 208 and bottle are contained in the microwave 201 and the microwave 201 is closed by the cover 230.

Fig. 50 shows the microwave 201 and associated components in more detail. The microwave 201 is formed of steel box which has been surface treated. It comprises a magnetron 235 for producing the microwaves and a tray 236 for collecting any spilt product in the microwave 201. The microwave 201 is suspended from a linear actuator 234 and is arranged such that it can slide horizontally to and from the bottle along the linear actuator 234. The linear actuator 234 is held by a support 233. The base of the microwave 201 contains a number of holes (not shown). However, all of the holes in the base have a diameter of less than 1 mm such that the microwaves cannot escape.

Fig. 51 shows the tray 204 in more detail. The tray 204 is formed from a plastic front cover 237 and a plastic top and side cover 238. The tray 204 is arranged to enclose the crusher 203, which extends through and is fixed to the tray 204. When the dispenser 200 is in use, the tray 204 and the crusher 203 are stationary (except for the rotation of the crusher 203) and a bottle (not shown) containing the frozen product is brought down over the crusher 203 for crushing. Once crushed, the crushed product is the extracted out the of the bottle, through the bottom of the tray 204 and into a receptacle 239 (see Fig. 45) located beneath the tray 204.

Fig. 52 shows the bottle holder 208 in more detail. The bottle holder 208 has a ring-shaped neck holder 240 for supporting the neck of a bottle in the holder 208 and a support 241 for supporting the bottle in a vertical position inside the holder 208. A fixing element 243 is provided near the top of the holder 208 for fixing the holder 208 to the microwave cover 230. The holder 208 also has a turnable knob 242 for holding the bottle in position in the holder 208. A stainless steel punching element (not shown) is provided at the rear of the holder 208 for insertion into the bottle. Providing a punching element helps to facilitate the removal of the product once it has been crushed and renders the bottle such that it cannot be re-used.

A movable locking handle 244 is also provided for locking the bottle into position in the holder 208. The handle 244 is attached to a pair of arms 249 with a locking hook 248 arranged at an opposite end to the handle. The arms 249 are pivotally connected to a pair of further arms 250, which in turn are pivotally connected to the bottle support 241. A further support 251 is attached to the arms 250. The locking hook 248 is for locking the handle 244, arms 249, 250 and support 251 to the bottle support 241, thereby holding and locking a bottle in the holder 208. When the bottle has been emptied and is ready for removal, a user pulls the handle 244 that the bottle is allowed to tilt out of the holder 208 and can be removed. The holder 208 is then ready for a further bottle to be inserted and locked into position in the holder 208.

Fig. 53 shows the electronic control board 207 in more detail. This comprises a support plate 245, two power sources 246a, 246b and a CPU set 247. The CPU set 247 is programmed with two pre-set programs for two different types of product (e.g. a dessert and a beverage). Various parameters of these programs may be set including duration of various stages (heating, crushing etc), movement of the actuators, when to start rotating the crusher, etc.

Operation of the dispenser 200 will now be described.

The dispenser 200 is connected to a 230 V AC power supply via an electrical cable. Switching on this power supply turns on the dispenser 200.

The user presses a door release button to automatically open the door 205 and open the compartment where a bottle is to be placed for processing.

The user takes a bottle, whose contents has been frozen at the temperature recommended or specified by the manufacturer. This is estimated to be between-12°C and -14°C.

The user removes the plastic cap of the bottle, pulls out the holder handle 244, unscrews the knob 242 and places the bottle on the support 251. The user then pushes the handle 244 up to insert the bottle, upside-down, into the holder 208 and then presses down hard to pierce the bottle with the steel punch which is located at the rear of the holder 208.

The user then presses the button on the touch-pad 260 which corresponds to the type of product requested, e.g. slush or dessert, and the dispenser starts the programmed process.

The door 205 closes and lateral movement of the microwave 201 is initiated along the microwave actuator 234. Once the microwave 201 reaches the end of actuator 234 it is closed, indicating that defrosting process may start. The duration of this process is determined by the selected product type and is pre-programmed into the CPU 247.

Once the product has been heated by the specified amount, the bottle is moved from microwave 201 back to a starting position and the crushing process starts. This process is programmed such that the bottle is repeatedly raised and lowered over the rotating crusher 203, the blades and paddles of which crush and beat the product within the bottle to the desired consistency. The extractor 218 empties the contents of the bottle out into a receptacle located beneath the inverted bottle.

Once this process is completed, the bottle is returned back up to the starting position and the door is opened so that the user can remove the empty bottle and leave the dispenser ready for another service when requested.

In order to clean the components of the dispenser 200, the following process is followed.

Within the display there is a programmed function for cleaning items that may stain during the preparation of desserts, specifically the bottle holder and the bucket or tray. This should be done twice per day

In order to do this, the user press the "cleaning" button and closes the door. The holder then rises to its highest position within the dispenser and the door is opened so that the bucket can be removed. After removing the bucket, the user presses a button to cause the door to close and the bottle holder to be moved down to the cleaning position. The door then opens again so that the user can remove the bottle holder via the handle for cleaning.

Once cleaned (e.g. in a dishwasher), in order to return the cleaned components, the dispenser is returned to the start position the bottle holder is mounted back in the dispenser. The user then presses the cleaning button again to reposition the holder so that the bucket or tray can be re-inserted. The user then presses a reset button to retrun the dispenser to its starting position for use.

## Claims

1. An apparatus (1, 200) for dispensing an ice-based product comprising:
heating means (9, 201) for heating a frozen product; and a crusher (4, 203) arranged to crush the product after it has been heated;
wherein, once the product has been heated and then crushed, an ice-based product can be dispensed from the apparatus.

2. An apparatus as claimed in claim 1, wherein the heating means is or comprises a microwave (9, 201).

3. An apparatus as claimed in claim 1 or 2, further comprising a receiver (32, 208) for receiving and holding a container (2) containing the frozen product in the apparatus.

4. An apparatus as claimed in claim 4, wherein the receiver comprises a support and/or clamping means (67) for holding the container in the apparatus, wherein the support preferably comprises a ring or part-ring (6, 240); and/or
the receiver comprises a punch for punching or piercing the container when held by the receiver.

5. An apparatus as claimed in any preceding claim, further comprising:
one or more means for moving (10, 11, 100, 150, 206) a container (2) containing the frozen product within the apparatus, wherein the means for moving the container is arranged to move the container vertically and/or horizontally and/or rotationally about a longitudinal axis of the container and/or rotationally about an axis other than the longitudinal axis of the container; and/or
one or more means for moving (234) a heating means (201) within the apparatus (200) such that the frozen product can be heated by the heating means.

6. An apparatus as claimed in claim 5, wherein the means for moving the container within the apparatus comprises means for moving the container to and from, or into and out of, the heating means, such that the frozen product can be heated by the heating means.

7. An apparatus as claimed in claim 5 or 6, wherein the means for moving the container within the apparatus comprises means for moving the container to and from the crusher, such that the frozen product can be crushed by the crusher.

8. An apparatus as claimed in any preceding claim, wherein the apparatus is arranged such that, during crushing, the crusher traces a linear or generally helical or spiral path within a container containing the frozen product.

9. An apparatus as claimed in any preceding claim, wherein the crusher comprises an elongated member (7, 211) with a crushing arrangement attached thereto, preferably wherein the crushing arrangement comprises a blade arrangement (5) comprising one or more blades and/or a grinder.

10. An apparatus as claimed in any preceding claim, further comprising an extractor (43, 218) for extracting the frozen product from a container after it has been crushed therein.

11. An apparatus as claimed in claim 10, wherein the extractor (43) comprises one or more, preferably two, flexible and resilient or rigid extraction elements for scraping, sweeping or drawing the crushed frozen product from the container; or
the extractor is in the form of a preferably rigid propeller for drawing the crushed frozen product from the container.

12. An apparatus as claimed in claim 10 or 11, wherein the extractor is attached to the elongated member of the crusher and/or the one or more extraction elements are longer than the largest radius of the crushing arrangement.

13. An apparatus as claimed in any preceding claim, wherein the apparatus is arranged such that, during crushing, a longitudinal axis of the crusher is not colinear with a longitudinal axis of a container containing the frozen product being crushed.

14. An apparatus as claimed in any preceding claim, further comprising a controller (13, 207) for controlling heating and/or crushing of the frozen product automatically.

15. A method of producing an ice-based product, the method comprising:
placing a frozen product in an apparatus (1, 200) for heating and crushing the frozen product;
heating the frozen product within the apparatus; and
crushing the frozen product within the apparatus.

16. A crusher (4, 203) for crushing a frozen product in a container (2) and then extracting it from the container (2), the crusher comprising: a crushing arrangement (5) for crushing the frozen product in the container and an extractor (43, 218) for extracting the product from the container after it has been crushed.

17. A crusher as claimed in claim 16, further comprising an elongated member (7, 211) to which the crushing arrangement and extractor are attached, wherein the elongated member is preferably made of a metal, preferably stainless steel.

18. A crusher as claimed in claim 16 or 17, wherein the crushing arrangement is made of a metal, preferably stainless steel.

19. A crusher as claimed in any of claims 16 to 18 , wherein the crushing arrangement is rotationally symmetric.

20. A crusher as claimed in any of claims 16 to 19, wherein the crushing arrangement is a blade arrangement comprising one or more blades, preferably a blade arrangement comprising 1, 2, 3, 4, 5, 6, 7, 8, 9 or 10 blades, and/or wherein the crushing arrangement comprises a grinder and/or wherein the crushing arrangement comprises one or more preferably blunt paddles.

21. A crusher as claimed in claim 20, wherein the blade arrangement comprises blades of at least two sizes.

22. A crusher as claimed in claim 20 or 21, wherein the blade arrangement comprises at least one blade which is bent and/or at least one blade which is serrated.

23. A crusher as claimed in any of claims 16 to 22, wherein the extractor comprises one or more, preferably two, flexible and resilient or rigid extraction elements for scraping, sweeping or drawing the crushed frozen product from the container.

24. A crusher as claimed in claim 23, wherein the one or more extraction elements are longer, preferably at least five times longer, than the largest radius of the crushing arrangement.

25. A crusher as claimed in claim 23 or 24, wherein the one or more extraction elements are made of silicone, rubber, plastic, and/or metal.

26. A crusher as claimed in any of claims 16 to 25, wherein the crushing arrangement is attached to an elongated member at a position closer to an end thereof than the extractor.

27. A crusher as claimed in any of claims 16 to 26, wherein the crushing arrangement and extractor attached to an elongated member such that the distance between the blade arrangement and the extractor is less than 10 mm.

28. A method of crushing and extracting a frozen product contained in a container (2), the method comprising:
introducing a crusher (4, 203) into the container, the crusher comprising a crushing arrangement (5) for crushing the frozen product in the container and an extractor (43, 218) for extracting the product from the container after it has been crushed;
crushing the frozen product with the crusher; and then
extracting the product from the container with the extractor.

29. An ice-based product dispenser (1, 200) comprising a crusher (4, 203) as claimed in of claims 16 to 27, wherein the dispenser is preferably an apparatus as claimed in any of claims 1 to 14.

30. Use of a crusher as claimed in any of claims 16 to 27 in an ice-based product dispenser (1, 200), wherein the dispenser is preferably an apparatus as claimed in any of claims 1 to 14.
